(19) Europäisches Patentamt European Patent Office Office européen des brevets

(11) **EP 3 704 374 B1**

(12) **EUROPÄISCHE PATENTSCHRIFT**

(45) Veröffentlichungstag und Bekanntmachung des Hinweises auf die Patenterteilung:
**13.03.2024 Patentblatt 2024/11**

(21) Anmeldenummer: **18807560.0**

(22) Anmeldetag: **02.11.2018**

(51) Internationale Patentklassifikation (IPC):
**F03D 1/06** *(2006.01)* **B64C 23/06** *(2006.01)*
**F02K 1/46** *(2006.01)*

(52) Gemeinsame Patentklassifikation (CPC):
**F03D 1/0633; B64C 23/06; F02K 1/46;**
**F03D 1/0675;** B64C 2230/28; F05B 2230/50;
F05B 2240/304; F05B 2240/3062; F05B 2240/40;
F05B 2250/25; F05B 2260/96; F05D 2240/127;
Y02E 10/72; Y02P 70/50; Y02T 50/10; (Forts.)

(86) Internationale Anmeldenummer:
**PCT/EP2018/080031**

(87) Internationale Veröffentlichungsnummer:
**WO 2019/086616 (09.05.2019 Gazette 2019/19)**

(54) **VERWIRBELUNGSELEMENT UND VERFAHREN ZUR HERSTELLUNG EINES VERWIRBELUNGSELEMENTS**

SWIRLING ELEMENT AND METHOD FOR PRODUCING A SWIRLING ELEMENT

ÉLÉMENT DE TOURBILLONNEMENT ET PROCÉDÉ POUR FABRIQUER UN ÉLÉMENT DE TOURBILLONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.11.2017 DE 102017125663**
**10.06.2018 DE 102018113800**

(43) Veröffentlichungstag der Anmeldung:
**09.09.2020 Patentblatt 2020/37**

(73) Patentinhaber: **Röhm, Klaus**
**72766 Reutlingen (DE)**

(72) Erfinder: **Röhm, Klaus**
**72766 Reutlingen (DE)**

(74) Vertreter: **Ege Lee & Roider Patentanwälte**
**Wilhelm-Wagenfeld-Straße 24**
**80807 München (DE)**

(56) Entgegenhaltungen:
KR-Y1- 200 436 732    US-A- 4 444 367
US-A- 4 543 784    US-A1- 2017 045 031

- **GYATT G W: "DEVELOPMENT AND TESTING OF VORTEX GENERATORS FOR SMALL HORIZONTAL AXIS WIND TURBINES", FINAL REPORT DOE/NASA/0367-1, XX, XX, 1. Juli 1986 (1986-07-01), XP000861589,**

(52) Gemeinsame Patentklassifikation (CPC): (Forts.)
    Y02T 50/60

**Beschreibung**

GEBIET DER ERFINDUNG

Die vorliegende Erfindung betrifft ein Verwirbelungselement zur Verwirbelung einer Fluidströmung und zur Lärmreduktion und Ertragssteigerung für ein rotierendes aerodynamisches Profil und ein Verfahren zur Herstellung eines derartigen Verwirbelungselements.

TECHNISCHER HINTERGRUND

Bei aerodynamischen Profilen entstehen, insbesondere bei hohen Geschwindigkeiten sowie im Falle von statischem oder dynamischem Strömungsabriss, auch als Stall bezeichnet, vermehrt Lärm sowie ein erhöhter Widerstand und mechanische Belastungen. Insbesondere bei Rotorblättern von Windenergieanlagen existieren immer strenger werdende Vorschriften zur Lärmemission, welche die Auslegung und letztlich den Ertrag beeinflussen. Zudem führen Umwelteinflüsse wie Windböen zu Strömungsabrissen und entsprechend dynamischen Belastungen und Schwingungen. Dies führt zu Zulassungsproblemen, Einschränkungen der Einsatzbereiche und zu massiverer Auslegung der Profile.
Verwirbelungselemente werden bisweilen oftmals bei Rotoren für Windkraftanlagen eingesetzt, vorwiegend in den radial äußeren Rotorblattbereichen, in welchen die höchsten Strömungsgeschwindigkeiten herrschen. Bisherige Verwirbelungselemente, sogenannte Wirbelgeneratoren oder Vortex Generatoren, dienen der Bildung einer turbulenten Grenzschicht entlang der Profiloberfläche, welche weniger anfällig für Strömungsabrisse ist. Die EP 2 824 320 A1 beschreibt derartige Vortex Generatoren, welche an der Unterdruckseite in vorderen oder mittleren Bereichen des Profils aufgebracht werden. Des Weiteren existieren Maßnahmen zur Lärmreduktion für Windkraftanlagen, ebenfalls vorwiegend in den radial äußeren Rotorblattbereichen. Diese Maßnahmen richten sich auf den sogenannten Endkantenwirbel, welcher an der Profilendkante entsteht. Dieser ist maßgeblich für die Lärmemission verantwortlich und erzeugt einen gewissen Widerstand bzw. vermindert die aerodynamische Effizienz des Profils. Zur Reduktion des Endkantenwirbels wird bisweilen eine gezackte Struktur, auch als Serration bezeichnet, an der hinteren Profilendkante vorgesehen. Beispielsweise beschreibt die DE 10 2014 213 929 A1 eine solche gezackte Struktur. Weiterer Stand der Technik ist bekannt durch Gyatt G W: "DEVELOPMENT AND TESTING OF VORTEX GENERATORS FOR SMALL HORIZONTAL AXIS WIND TURBINES", Final Report DOE/NASA/0367-1, XX, XX, 1. Juli 1986.

ZUSAMMENFASSUNG DER ERFINDUNG

Vor diesem Hintergrund liegt der vorliegenden Erfindung die Aufgabe zugrunde, einen neuen Ansatz zur Lärmreduktion, Effizienzsteigerung und verringerten Belastung aerodynamischer Profile anzugeben.
Erfindungsgemäß wird diese Aufgabe durch ein Verwirbelungselement mit den Merkmalen des Patentanspruchs 1 und/oder durch ein Verfahren mit den Merkmalen des Patentanspruchs 12 gelöst.
Demgemäß ist vorgesehen:

- ein Verwirbelungselement zur Verwirbelung einer Fluidströmung, insbesondere für ein rotierendes aerodynamisches Profil oder eine Turbine, mit: einem Befestigungsabschnitt, der zur Befestigung an einer Profiloberfläche ausgebildet ist;
  und einem mit dem Befestigungsabschnitt verbundenen strömungsaktiven Abschnitt, welcher ein Leitblech aufweist, das zumindest abschnittsweise mit seinem gesamten Querschnitt um eine gemeinsame Achse verdreht ausgebildet ist.

- ein Verfahren zur Herstellung eines erfindungsgemäßen Verwirbelungselements, mit den Schritten: Bereitstellen eines Blechs, insbesondere eines thermoplastischen Faserverbundblechs oder eines metallischen Blechs, welches zur Ausbildung eines aerodynamisch aktiven Abschnitts zugeschnitten ist; Einbringen des Blechs in ein Umformwerkzeug, wobei das Umformwerkzeug als Umformpresswerkzeug, insbesondere Heißumformpresswerkzeug, ausgebildet ist; und Umformen des Blechs mittels der Umformpresse durch zumindest abschnittsweises Aufbringen einer Verdrehung des Blechs um zumindest 10°, insbesondere bis zu 90°, mit seinem gesamten Querschnitt um eine gemeinsame Achse durch eine entsprechende Form des Umformpresswerkzeugs

Die der vorliegenden Erfindung zugrunde liegende Idee besteht darin, ein Verwirbelungselement mit einem über den gesamten Querschnitt verdrehten Leitblech auszubilden und mit einem von einem aerodynamisch aktiven Abschnitt separaten Befestigungsabschnitt auf einem aerodynamischen Profil zu befestigen. Dies erlaubt eine leichte Herstellbarkeit und einen äußerst flexiblen Einsatz des Verwirbelungselements. Insbesondere können mit derart erzeugten Wirbeln an einem aerodynamischen Profil - je nach Dimensionierung und Positionierung auf der Profiloberfläche - unterschiedliche Effekte erzielt werden. Das erfindungsgemäße Verwirbelungselement ist neben der Erzeugung turbulenter Grenzschichten in der Art eines Vortex Generators auch zur Lärmreduktion in der Art bisheriger Serrations einsetzbar. Insbesondere wird dabei erfindungsgemäß, zusätzlich zu einer zackenartigen Erstreckung über die Profilendkante hinaus, auch ein den Profilendkantenwirbel zusätzlich reduzierender Wirbel generiert. Damit wird im Vergleich zu herkömmlichen Serrations die Lärmemission eines aerodynamischen Profils zusätzlich reduziert und die Effizienz zusätzlich gesteigert.

Beispielsweise lässt sich erfindungsgemäß im Vergleich zu herkömmlichen Serrations eine Steigerung der Auftriebszahl und Gleitzeit, was letztlich eine Widerstandsreduktion und Ertragssteigerung bedeutet, von bis zu 3 % erreichen. Ferner lässt sich eine Geräuschreduktion in einem Bereich von zumindest > 1 dB(A) bis > 5 dB(A) erzielen.

Mit der erfindungsgemäßen Lärmreduktion ist auf diese Weise vorteilhaft eine größere Dimensionierung oder eine höhere Anzahl von Anlagen innerhalb der Lärmvorschriften möglich. Somit wird eine Synergie aus Ertragssteigerung und gleichzeitiger Lärmreduzierung erreicht, wobei ferner eine einfache und kostengünstige Herstellbarkeit gewährleistet ist.

Die vorliegende Erfindung ist für die Verwendung an unterschiedlichsten Arten rotierender aerodynamischer Profile einsetzbar. Neben dem Einsatz für Rotorblätter von Rotoren an Windkraftanlagen sind beispielsweise auch Anwendungen für Antriebspropeller oder andere rotierende Profile denkbar.

Entsprechend breit ist der Reynoldszahlenbereich für erfindungsgemäße Anwendungen, der im Bereich von etwa $1 \times 10^5$ bis $1 \times 10^7$, insbesondere $0,5 \times 10^6$ bis $30 \times 10^6$, liegt. Denkbare jedoch nicht ausschließliche Anwendungsbereiche liegen beispielsweise für Rotorblätter und Propeller im Bereich von $1 \times 10^6$ bis $10 \times 10^6$ und für Turbinen und Strahltriebwerksgehäuse.

Unter einem Blech ist im Rahmen der vorliegenden Erfindung im Allgemeinen ein flaches Halbzeug zu verstehen, wobei es auf den Werkstoff oder dessen Herstellung nicht ankommt. Neben Metallen wie Aluminium, Titan, Edelstahl oder dergleichen kommen insbesondere auch Kunststoffmaterialien, vorzugsweise Faserverbundmaterialien, insbesondere thermoplastische Faserverbundmaterialien, in Frage. Es kann, muss sich jedoch nicht notwendigerweise um ein Walzprodukt handeln. Umfasst sind unter anderem in der Gestalt flache oder streifenartige Halbzeuge, die umformbar sind.

Folglich ist unter einem Leitblech insbesondere ein verdreht umgeformtes flaches Halbzeug zu verstehen, welches zur Verwirbelung einer Strömung mit seinem gesamten Querschnitt verdreht ausgebildet ist. Umfasst sind jedoch auch 3D geformte Elemente mit entsprechend verdrehter Gestalt.

Erfindungsgemäß ist das Leitblech zumindest abschnittsweise mit seinem gesamten Querschnitt um eine gemeinsame Achse verdreht ausgebildet. Es dient somit insbesondere mit dem gesamten Querschnitt der Wirbelerzeugung.

Dementsprechend weist das Leitblech über seine Länge eine vorbestimmte Steigung auf, welche aufgrund der Verdrehung über den Querschnitt konstant oder unterschiedlich stark sein kann. Erfindungsgemäß kann eine derartige Steigung über die Länge gleichmäßig oder unterschiedlich stark verteilt vorgesehen sein. Insbesondere kann die Steigung über die Länge des Leitblechs zunehmen, sodass auf diese Weise eine verstärkte Beschleunigung bzw. ein verstärkter Drall des zu erzeugenden Wirbels erreichbar ist.

Die Verdrehung kann sich über ein Winkelsegment, über eine ganze Umdrehung oder über mehrere Umdrehungen fortsetzen. Denkbar sind insbesondere Verdrehungen im Bereich ab >10°, vorzugsweise ab >45°, bis zu mehreren Umdrehung, beispielsweise bis zu zwei ganzen Umdrehungen (720°), wobei auch noch größere Umdrehungszahlen nicht ausgeschlossen sind.

In der Verdrehung können dabei lokale Lücken, beispielsweise in Form von Ausnehmungen in dem verdrehten Leitblech, oder Unterbrechungen oder Beendigungen der Verdrehung, beispielsweise mit geraden Abschnitten, vorgesehen sein. Somit kann eine solche Verdrehung auch durch einen oder mehrere Knicke des Leitbleches ausgebildet sein.

Erfindungsgemäß ist das Leitblech dreiecksförmig, trapezförmig, teilkreisförmig, teilellipsenförmig und/oder vieleckförmig ausgebildet.

Ferner sind auch zusammengesetzte Formen möglich.

Die Dimensionierung des Leitblechs, insbesondere der Grundform des Leitblechs, kann abhängig vom Anwendungsfall variieren. Denkbar sind beispielsweise Breiten von 0,2 mm bis 300 mm, Dicken in Bereichen von 0,2 mm bis 10 mm, vorzugsweise 0,25 mm bis 5 mm, und Längen von 0,1 -facher bis zu 20 -facher Breite. Die Dicke wird stets kleinstmöglich dimensioniert, um damit durch eine gegebenenfalls entstehende Kante möglichst wenig Widerstand zu erzeugen. Insbesondere wird die Dicke an die Breite und Länge entsprechend angepasst, um eine für die gewünschte Verwirbelung ausreichende Steifigkeit und eine für die gewünschte Lebensdauer ausreichende Festigkeit bereitzustellen (z.B bei Hagelschlag).

Auch für den Befestigungsabschnitt sind vielfältige Formen und Arten der Befestigung an der Profiloberfläche denkbar. Bei einer Ausführungsform ist der Befestigungsabschnitt schlicht auf die Profiloberfläche aufbringbar oder aufgebracht vorgesehen, beispielsweise adhäsiv bzw. mittels eines Klebers. Dabei ist eine geringe Dicke des Befestigungsabschnitts vorteilhaft, um eine an dem Rand des Befestigungsabschnitts entstehende Kante möglichst klein zu halten. Insbesondere kann eine vordere Abschlusskante des Befestigungsabschnitts auch abgeschrägt, beispielsweise mit einer Fase versehen, ausgebildet sein, um den Übergang zu glätten und so den Widerstand zu minimieren.

Bei einer weiteren Ausführungsform ist eine Integration des Befestigungsabschnitts in die Profiloberfläche denkbar. Beispielsweise kann eine der Dicke des Befestigungsabschnitts entsprechende Nut oder Ausnehmung in der Profiloberfläche vorgesehen sein, in welche der Befestigungsabschnitt versenkbar ist.

Bei einer Ausführungsform ist der Befestigungsabschnitt aus dem gleichen Halbzeug wie das Leitblech geformt. Bei einer einfachsten Ausführung weist somit der Befestigungsabschnitt eine flache Form auf, die stoffschlüssig oder adhäsiv an der Profiloberfläche angebracht werden kann. Darüber hinaus sind an eine Profiloberflächenform angepasste Formen, beispielsweise mit einem Knick oder zweidimensionaler bzw. dreidimensionaler Wölbung, denkbar.

Eine adhäsive Befestigung des Befestigungsabschnitts erlaubt eine sehr einfache Nachrüstbarkeit für bestehende aerodynamische Profile, insbesondere an Windkraftanlagen. Zudem ist damit eine lokale Verstärkung eines aerodynamischen Profils ermöglicht, insbesondere im hochbelasteten Bereich von Profilendkanten.

Darüber hinaus wäre eine Aufnahme des Befestigungsabschnitts in einer Ausnehmung bzw. einem Schlitz der Profiloberfläche denkbar, beispielsweise direkt an der Profilendkante. Der Befestigungsabschnitt ist dabei entsprechend der Schlitzgeometrie geformt vorgesehen.

Darüber hinaus ist eine von dem aerodynamisch aktiven Abschnitt unabhängige Ausbildung des Befestigungsabschnitts und eine nachträgliche Kopplung des aerodynamisch aktiven Abschnitts mit dem Befestigungsabschnitt möglich. Dazu sind vielfältige bewegliche oder unbewegliche Kopplungen denkbar. Beispielsweise kann der Befestigungsabschnitt als eine Art Sockel ausgebildet sein, an welchen der aerodynamisch aktive Abschnitt angebracht bzw. daran gelagert wird. Denkbar ist ferner eine gelenkige oder rotierbare Lagerung des aerodynamisch aktiven Abschnitts an dem Befestigungsabschnitt. Ferner wäre auch eine einfache Aufhängung des aerodynamisch aktiven Abschnitts, beispielsweise an einem an der Profiloberfläche gespannten Draht oder Seil, denkbar.

Bei einem aerodynamischen Profil kann der Befestigungsabschnitt an der Saugseite bzw. Profil-Oberseite oder an der Druckseite bzw. Profil-Unterseite angeordnet bzw. angebracht sein. Denkbar ist ferner, dass sich der Befestigungsabschnitt über beide Seiten des Profils erstreckt, beispielsweise im Querschnitt V-förmig über die Profilendkante hinweg, gegebenenfalls mit einem entsprechenden Knick im Bereich der Profilendkante.

Unter dem aerodynamischen Profil bzw. der Profiloberfläche sind im Sinne der vorliegenden Erfindung auch an das Profil angebrachte Anbauteile und deren Oberflächen und Kanten, insbesondere Zahnelemente, Klappen oder dergleichen, zu verstehen. Beispielsweise kann der Befestigungsabschnitt auch zur Anbringung auf Zahnelementen von herkömmlichen Serrations oder zur Anbringung an eine Oberfläche oder eine Kante einer Klappe, beispielsweise einer Rückstromklappe oder eines Gurnay-Flaps, ausgebildet und bei einem erfindungsgemäßen aerodynamischen Profil entsprechend angebracht sein.

Erfindungsgemäße Verwirbelungselemente können abschnittsweise an dem aerodynamischen Profil vorgesehen sein. Insbesondere können erfindungsgemäße Verwirbelungselemente mit anderen aerodynamischen Maßnahmen, wie Vortex-Generatoren oder Serrations, kombiniert an einem aerodynamischen Profil vorgesehen sein.

Das erfindungsgemäße Herstellungsverfahren ist zur einfachen Herstellung großer Stückzahlen erfindungsgemäßer Verwirbelungselemente ausgelegt. Dabei wird eine Umformung durch Verdrehen des Blechs mit dem gesamten Querschnitt um eine gemeinsame Achse vorgenommen. Je nach Werkstoff des Blechs kann dieser Umformprozess in kaltem oder heißem Zustand vorgenommen werden.

Im Falle eines Umformpresswerkzeuges sorgt die Form des Werkzeuges mit entsprechenden Vertiefungen und/oder Erhöhungen bei Aufbringen einer Normalkraft für die gewünschte Verdrehung. Ein Verdrehwinkel ist dabei zur Gewährleistung der Entformbarkeit auf maximal eine viertel Umdrehung, das heißt etwa 90°, begrenzt. Insbesondere können in einem entsprechenden Presswerkzeug eine Vielzahl gemeinsam eingelegter Leitbleche, d. h. die Leitbleche mehrerer eingelegter Verwirbelungselemente und/oder mehrere Leitbleche eines Verwirbelungselements, parallel umgeformt werden.

Im Falle von Rotationsaktuatoren, insbesondere Rotationsmagneten, welche auch als Drehmagneten bezeichnet werden, handelt es sich vorzugsweise um magnetische Aktoren, die über einen vorbestimmten Drehwinkel eine Drehbewegung mit einem vorbestimmten Drehmoment ausführen können. Der Drehwinkel ist dabei in der Regel kleiner oder gleich einer halbe Umdrehung bzw. 180°. Der Rotationsmagnet ist vorzugsweise hinsichtlich seines Drehmoments auf die Form und den Werkstoff des Blechs ausgelegt. Insbesondere ist mit einer Vielzahl paralleler Rotationsmagneten eine Vielzahl gemeinsam eingelegter Leitbleche parallel umformbar.

Darüber hinaus sind auch weitere Herstellungsarten zur Herstellung des Verwirbelungselements denkbar, beispielsweise 3D Formverfahren wie 3D-Druck oder 3D-Fräsen.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausführungsform ist das Leitblech in sich selbst verdreht ausgebildet, so dass die Achse in dem Leitblech verläuft. Insbesondere handelt es sich um eine Torsion des Leitblechs entlang der Achse. Insbesondere verläuft die Achse in Längsausdehnungsrichtung des Leitblechs. Vorteilhaft wird auf diese Weise das Leitblech automatisch durch die Verformung ausgesteift.

Erfindungsgemäß ist das Leitblech um zumindest 10°, insbesondere zumindest eine achtel Umdrehung bzw. etwa 45°, bevorzugt um zumindest eine viertel Umdrehung bzw. etwa 90°, um die Achse verdreht ausgebildet. Vorteilhaft kann somit ein ausreichender Drall eines Wirbels erzeugt werden, der zur Erzeugung einer turbulenten Grenzschicht und/oder zur Verminderung des Endkantenwirbels ausreicht. Darüber hinaus sind derartige Verdrehungen mit zu Massenherstellung geeigneten Verfahren, beispielsweise Pressformen, einfach in hohen Stückzahlen herstellbar.

Gemäß einer Ausführungsform ist das Leitblech zur schrägen Anströmung asymmetrisch, insbesondere in einer ebenen Projektion asymmetrisch, ausgebildet. Entsprechend ist ein Blechzuschnitt bereits vor dem Umformen asymmetrisch ausgebildet. Nach dem Verdrehen bleibt eine Asymmetrie erhalten. Somit wird, insbesondere bei Windkraftanlagen, das Leitblech den in Realität schrägen Anströmungsverhältnissen des Rotorblattes gerecht, die durch die Rotation entstehen. Alternativ oder zusätzlich kann der Blechzuschnitt unterschiedliche Größen und/oder Asymmetrien an Leitblechen aufweisen, bzw. unterschiedliche Blechzuschnitte unterschiedliche Größen und/oder Asymmetrien an Leitblechen aufweisen.

Erfindungsgemäß ist das Leitblech schraubenförmig bzw. helixförmig verdreht ausgebildet. Insbesondere kann dabei eine im Zentrum des Leitblechs liegende Achse mit einem Verstärkungselement, beispielsweise einem zentralen Rundprofil- oder Rohrabschnitt, gebildet sein, um welchen herum das Blech verdreht ist. Somit wird eine besonders steife Form bereitgestellt. Insbesondere sind damit auch mehrgängige Schraubenformen bzw. eine Mehrfachhelixform des aerodynamisch aktiven Abschnitts ermöglicht. Derartige Ausgestaltungen sind beispielsweise für rotierend an dem Befestigungsabschnitt gelagerte aerodynamisch aktive Abschnitte geeignet, da hierzu aufgrund der Eigenrotation eine deutlich höhere Steigung und gegebenenfalls auch eine höhere Anzahl von Steigungsgängen vorteilhaft ist.

Gemäß einer Ausführungsform ist zwischen dem Befestigungsabschnitt und dem aerodynamisch aktiven Abschnitt des Verwirbelungselements ein Ausrichtungsabschnitt zur von dem Befestigungsabschnitt unterschiedlichen Ausrichtung der Achse des aerodynamisch aktiven Abschnitts vorgesehen. Die Ausrichtung der Achse des Leitblechs ist somit vorteilhaft unabhängig von der durch die Profiloberfläche vorgegebenen Ausrichtung des Befestigungsabschnitts. Somit lässt sich das Leitblech vorteilhaft zu der Profiloberfläche parallel versetzt oder schräg zu dem Profil ausrichten. Auf diese Weise kann das Leitblech, je nach Position und Ausrichtung, an einem aerodynamischen Profil zur zusätzlichen Generierung von Auftrieb und/oder zur verstärkten Lärmreduktion ausgerichtet vorgesehen sein. Insbesondere kann sowohl axial als auch radial an einem aerodynamischen Profil die Ausrichtung des Leitblechs individuell angepasst an die lokalen Verhältnisse vorgenommen werden. Der Ausrichtungsabschnitt kann beispielsweise einen Knick und/oder eine Stufe und/oder eine Kurvenform beschreiben. Er kann den aerodynamisch aktiven Abschnitt zu einer Saugseite oder zu einer Druckseite ausrichten. Alternativ oder zusätzlich ist eine seitliche bzw. radiale Ausrichtungskomponente möglich

Gemäß einer Ausführungsform ist der Befestigungsabschnitt einteilig mit dem aerodynamisch aktiven Abschnitt und/oder dem Ausrichtungsabschnitt ausgebildet. Insbesondere handelt es sich um ein einteiliges Blech oder einen einteiligen Streifen. Entsprechendes ist das Verwirbelungselement aus einem gemeinsamen Halbzeug gefertigt, welches im Bereich des aerodynamisch aktiven Abschnitts zu einem Leitblech umgeformt und im Bereich des Befestigungsabschnitts in einer zur Befestigung geeigneten Form belassen oder umgeformt ist, beispielsweise angepasst an die Profiloberfläche. Auch ein Ausrichtungsabschnitt kann einteilig damit geformt sein, beispielsweise als Knick und/oder Stufe und/oder Kurvenform des Halbzeugs.

Gemäß einer Ausführungsform sind der Befestigungsabschnitt und der aerodynamisch aktive Abschnitt mit zwei unterschiedlichen Teilen ausgebildet, die miteinandergekoppelt sind. Insbesondere kann es sich um eine formschlüssige Kopplung handeln, beispielsweise mittels einer Rastverbindung. Ferner wäre eine Aufhängung aerodynamisch aktiver Abschnitte, beispielsweise an einem Bolzen, Draht, Seil oder dergleichen des Befestigungsabschnitts denkbar. Der Befestigungsabschnitt kann dabei unterschiedlichste Gestalt aufweisen. Denkbar ist beispielsweise eine flächige Befestigung auf der Profiloberfläche. Denkbar ist aber auch eine Befestigung an einer Kante der Profiloberfläche oder in einer Ausnehmung der Profiloberfläche.

Erfindungsgemäß ist eine Vielzahl von mit dem Befestigungsabschnitt verbundenen strömungsaktiven Abschnitten vorgesehen. Diese sind insbesondere mit zumindest im Wesentlichen gleicher Ausrichtung der Achsen an dem Befestigungsabschnitt angeordnet. Vorteilhaft kann auf diese Weise eine Vielzahl strömungsaktiver Abschnitte zum einen in einem gemeinsamen Schritt hergestellt und zum anderen in einem gemeinsamen Schritt montiert werden. Die Vielzahl kann dabei zumindest zwei betragen und ist nach oben nicht begrenzt. Dabei sind insbesondere fertigungs- und/oder strömungsbedingte Abweichungen der Ausrichtung möglich. Vorzugsweise sind die strömungsaktiven Abschnitte in regelmäßigen Abständen zueinander angeordnet. Denkbar sind aber beispielsweise auch lokale Konzentrationen oder über den Verlauf zunehmende Dichten der strömungsaktiven Abschnitte. Praktisch wird eine Breite des Befestigungsabschnitts durch eine Produktionsanlage limitiert sein. Denkbar wären beispielsweise beliebige maximale Breiten eines Befestigungsabschnitts mit einer Dichte von bis zu 1000 Stück strömungsaktiver Abschnitte pro einer Breite des Befestigungsabschnitts von einem Meter vorzusehen. Insbesondere können im Falle eines Rotorblatts für den Rotor einer Windkraftanlage Dichten im Bereich von 5 bis 50 aerodynamisch aktiven Abschnitten pro einem Meter Breite des Befestigungsabschnitts vorgesehen sein.

Erfindungsgemäß sind benachbarte strömungsaktive Abschnitte jeweils abwechselnd in unterschiedliche Drehrichtungen verdreht zur Erzeugung gegensinniger Wirbel ausgebildet. Auf diese Weise sind aufeinandertreffende Geschwindigkeitsvektoren in Überschneidungsgebieten der Wirbel stets gleichsinnig. Dies ist insbesondere bei hohen Dichten bzw. geringen Abständen der aerodynamisch aktiven Abschnitte vorteilhaft. Somit wird eine Reduktion von Reibungen der Wirbel untereinander erreicht, wodurch insgesamt weniger Widerstand entsteht. Auf diese Weise kann die gleiche Wirkung der Verwirbelungselemente bei verringertem Widerstand erreicht werden.

Gemäß einer nicht beanspruchten Ausführungsform eines aerodynamischen Profils ist der strömungsaktive Abschnitt im Bereich einer Profilendkante der Profiloberfläche angeordnet, wobei der strömungsaktive Abschnitt zur Erzeugung eines den Endkanten-Wirbel reduzierenden Wirbels vorgesehen ist. Insbesondere ist der strömungsaktive Abschnitt über die Profilendkante, an welcher ein Endkanten-Wirbel entsteht, hinausstehend angeordnet. Auf diese Weise wird die reduzierende Wirkung auf den Endkanten-Wirbel maximiert. Somit ist im Vergleich zu herkömmlichen Serrations eine zusätzliche Wirkung erzielt, welche zur Lärmreduzierung und Effizienzsteigerung und gegebenenfalls zur statischen und /oder dynamischen Lastreduktion beiträgt.

Gemäß einer weiteren nicht beanspruchten Ausführungsform des aerodynamischen Profils ist der strömungsaktive Abschnitt auf der Profiloberfläche angeordnet und zur Erzeugung eines einen Strömungsabriss von der Profiloberfläche vermeidenden Wirbels vorgesehen. Insbesondere wird somit eine turbulente Grenzschicht erzeugt. Auf diese Weise ist das erfindungsgemäße Verwirbelungselement anstatt herkömmlicher Vortex Generatoren vorgesehen.

Gemäß einer Ausführungsform des nicht beanspruchten aerodynamischen Profils ist eine Vielzahl von Verwirbelungselementen vorgesehen. Alternativ oder zusätzlich kann zumindest ein, d.h. ein oder mehrere, eine Vielzahl von aerodynamisch aktiven Abschnitten aufweisendes Verwirbelungselement vorgesehen sein. Benachbarte aerodynamisch aktive Abschnitte sind dabei jeweils abwechselnd in unterschiedliche Drehrichtungen verdreht zur Erzeugung gegensinniger Wirbel ausgebildet. In gegenseitigen Einflussbereichen benachbarter Wirbel sind somit deren Geschwindigkeitsvektoren in Umfangsrichtung gleichläufig. Auf diese Weise wird erreicht, dass die Wirbel nebeneinander mit einer deutlich geringeren Reibung existieren als bei gleichläufigen Wirbeln. Somit wird der mit den Verwirbelungselementen erzeugte Widerstand, insbesondere in Bereichen kleiner Anstellwinkel (AoA) wie sie im Außenbereich von Rotorblättern vorliegen, verringert.

Die obigen Ausgestaltungen und Weiterbildungen lassen sich, sofern sinnvoll, beliebig miteinander kombinieren. Insbesondere sind sämtliche Ausgestaltungen des Verwirbelungselements auf das aerodynamische Profil und das Verfahren zur Herstellung eines Verwirbelungselements übertragbar, und sofern sinnvoll, auch umgekehrt.

INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:

Fig. 1    eine perspektivische Ansicht eines Verwirbelungselements;

Fig. 2    eine Seitenansicht des Verwirbelungselements gemäß Fig. 1;

Fig. 3    eine schematische Draufsicht auf ein Verwirbelungselement mit einer Vielzahl aerodynamisch aktiver Abschnitte;

Fig. 4    eine schematische Draufsicht auf ein Verwirbelungselement gemäß einer weiteren Ausführungsform;

Fig. 5    eine schematische Schnittansicht eines aerodynamischen Profils;

Fig. 6    eine schematische Schnittansicht eines aerodynamischen Profils gemäß einer weiteren Ausführungsform;

Fig. 7    eine schematische Schnittansicht eines aerodynamischen Profils gemäß einer noch weiteren Ausführungsform;

Fig. 8    eine schematische Schnittansicht eines aerodynamischen Profils gemäß einer weiteren Ausführungsform;

Fig. 9    eine schematische Schnittansicht eines aerodynamischen Profils gemäß einer weiteren Ausführungsform;

Fig. 10    eine perspektivische Detailansicht eines Leitblechs gemäß einer Ausführungsform;

Fig. 11    eine Rückansicht des Leitblechs nach Fig. 10;

Fig. 12    eine perspektivische Ansicht des Bereichs einer Profilendkante mit Verwirbelungselement;

Fig. 13    eine perspektivische Ansicht eines aerodynamischen Profils mit einer Profilendkante gemäß Fig. 12;

Fig. 14    eine Rückansicht des aerodynamischen Profils gemäß Fig. 13;

Fig. 15    eine perspektivische Ansicht eines aerodynamischen Profils gemäß einer weiteren Ausführungsform;

Fig. 16    eine Draufsicht auf das aerodynamische Profil gemäß Fig. 15;

Fig. 17    eine Rückansicht des aerodynamischen Profils gemäß Fig. 15 und 16;

Fig. 18    eine perspektivische Ansicht eines Leitblechs gemäß einer weiteren Ausführungsform;

Fig. 19    eine Draufsicht auf das Leitblech nach Fig. 18;

Fig. 20    eine Rückansicht des Leitblechs nach Fig. 18 und 19;

Fig. 21    eine schematische Draufsicht von Verwirbelungselementen gemäß einer weiteren Ausführungsform;

Fig. 22    eine schematische Seitenansicht eines Abschnitts eines aerodynamischen Profils mit Verwirbelungselementen gemäß Fig. 21;

Fig. 23    eine schematische Draufsicht auf ein Verwirbelungselement gemäß einer weiteren Ausführungsform;

Fig. 24    eine Vorderansicht eines aerodynamisch aktiven Abschnitts mit mehreren Leitblechen;

Fig. 25    eine schematische Seitenansicht des aerodynamisch aktiven Abschnitts gemäß Fig. 24;

Fig. 26    eine Seitenansicht eines Verwirbelungselements gemäß einer weiteren Ausführungsform;

Fig. 27    eine Seitenansicht eines Verwirbelungselements gemäß einer noch weiteren Ausführungsform;

Fig. 28    eine perspektivische Ansicht eines Verwirbelungselements gemäß einer weiteren Ausführungsform;

Fig. 29    eine perspektivische Ansicht eines Verwirbelungselements gemäß einer noch weiteren Ausführungsform;

Fig. 30    eine perspektivische Ansicht eines Verwirbelungselements gemäß einer weiteren Ausführungsform;

Fig. 31    eine Rückansicht des Verwirbelungselements gemäß Fig. 30;

Fig. 32    eine schematische perspektivische Ansicht eines Abschnitts eines aerodynamischen Profils gemäß einer weiteren Ausführungsform;

Fig. 33    eine Draufsicht des aerodynamischen Profils gemäß Fig. 32;

Fig. 34    eine schematische Seitenansicht eines aerodynamischen Profils gemäß einer weiteren Ausführungsform;

Fig. 35    eine schematische Seitenansicht eines aerodynamischen Profils gemäß einer noch weiteren Ausführungsform;

Fig. 36    eine Vorderansicht eines verdrehten Leitblechs;

Fig. 37    eine Vorderansicht eines gegensinnig verdrehten Leitblechs;

Fig. 38    eine schematische Darstellung nebeneinander angeordneter gegensinnig verdrehter Leitbleche;

Fig. 39     eine schematische Darstellung der Strömungsverhältnisse an einem aerodynamischen Profil;

Fig. 40     eine schematische Darstellung der Strömungsverhältnisse an einem aerodynamischen Profil gemäß einer weiteren Ausführungsform;

Fig. 41     eine Draufsicht auf ein Rotorblatt gemäß einer Ausführungsform;

Fig. 42     eine Detailansicht des Randes des Rotorblatts gemäß Fig. 41;

Fig. 43     eine schematische Darstellung einer Windkraftanlage mit einem Rotor, der ein erfindungsgemäßes aerodynamisches Profil aufweist;

Fig. 44     eine schematische Darstellung eines Turbinengehäuses, welches ein erfindungsgemäßes aerodynamisches Profil aufweist;

Fig. 45     eine schematische Darstellung eines separaten Befestigungsabschnitts und aerodynamisch aktiven Abschnitts;

Fig. 46     eine schematische Darstellung eines Verwirbelungselements mit den Teilen gemäß Fig. 45;

Fig. 47     einen schematisch dargestellten Aufbau eines Windkanals;

Fig. 48     eine Seitenansicht des Messaufbaus einer Lärmmessung im Messvolumen des Windkanals nach Fig. 47;

Fig. 49     ein Diagramm eines Messergebnisses mit dem Messaufbau nach Fig. 48;

Fig. 50     ein weiteres Diagramm eines Messergebnisses mit dem Messaufbau nach Fig. 48;

Fig. 51     eine Draufsicht auf ein Standardserration trapezförmig;

Fig. 52     eine gedrehte Draufsicht auf ein Standardserration trapezförmig;

Fig. 53     eine perspektivische Ansicht von vorne-oben auf ein Serration trapezförmig und verdreht von 45 bis 180 Grad;

Fig. 54     eine Draufsicht auf ein Serration trapezförmig und verdreht von 45 bis 180 Grad;

Fig. 55     eine Vordersicht eines Serration trapezförmig und verdreht von 45 bis 180 Grad;

Fig. 56     eine perspektivische Ansicht eines Serrations;

Fig. 57     eine numerische Dynamic Stall Simulation mit dem DLR-TAU Code;

Fig. 58     eine schematische Darstellung gegensinniger Wirbel an der Endkante eines Rotorblattes aufgrund gegensinniger Serrations;

Fig. 59     ein Auftriebsbeiwertdiagramm;

Fig. 60     ein Widerstandsbeiwertdiagramm;

Fig. 61     ein Drehmomentbeiwertdiagramm;

Fig. 62     ein Gleitzahldiagramm;

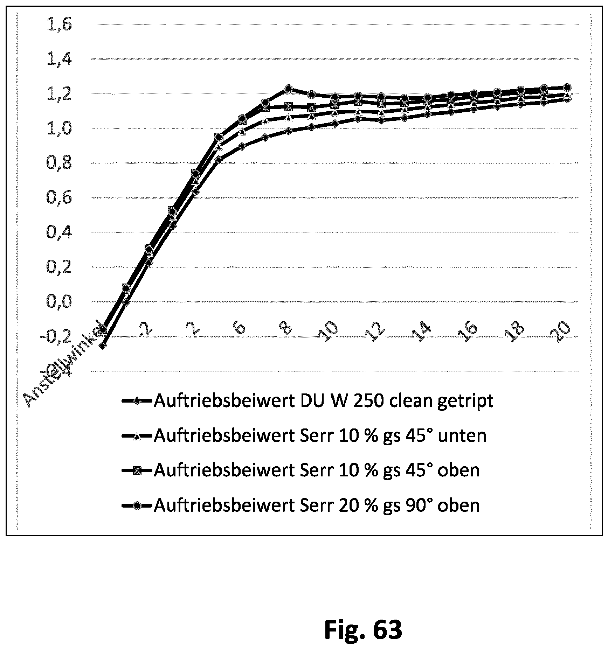

Fig. 63     ein Auftriebsbeiwertdiagramm einer weiteren Ausführungsform;

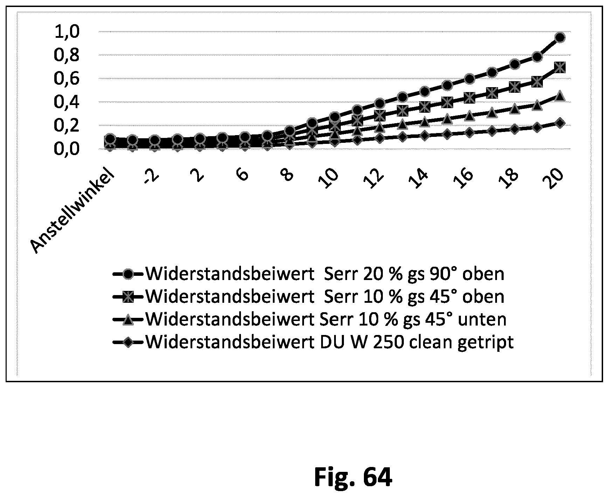

Fig. 64     ein Widerstandsbeiwertdiagramm einer weiteren Ausführungsform;

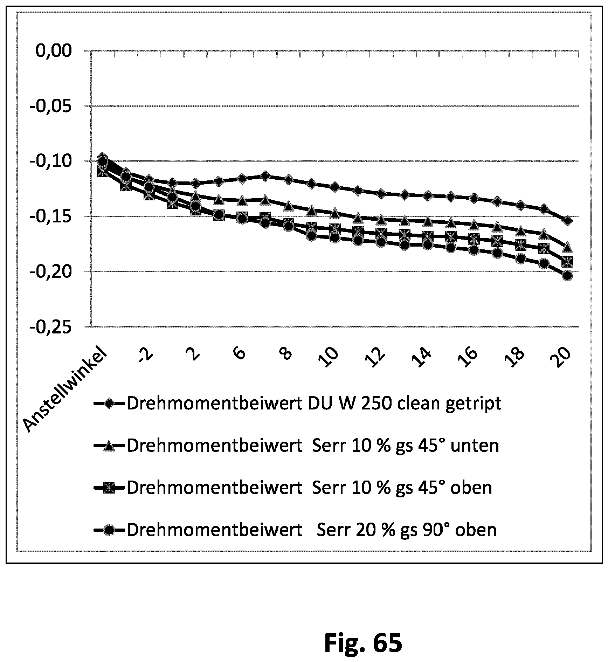

Fig. 65     ein Drehmomentbeiwertdiagramm einer weiteren Ausführungsform;

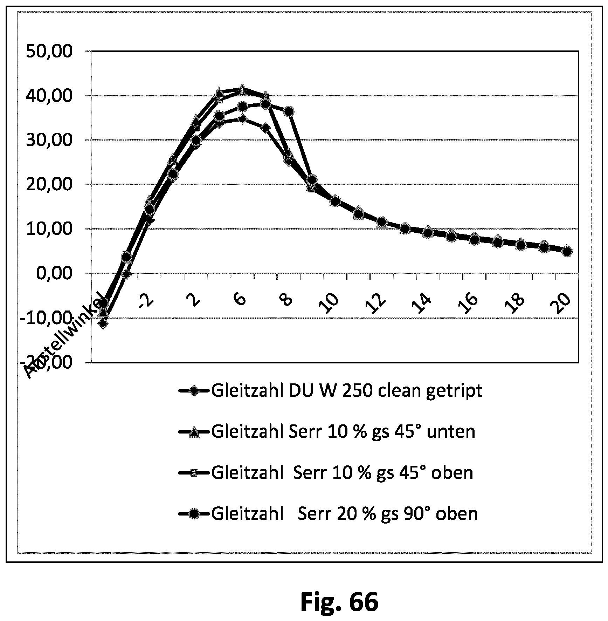

Fig. 66        ein Gleitzahldiagramm einer weiteren Ausführungsform;

Fig. 67        ein Umformwerkzeug zur Herstellung eines Verwirbelungselements;

Fig. 68A      ein Blech vor einer Umformung; und

Fig. 68B      ein Verwirbelungselement mit verdrehtem Leitblech.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

BESCHREIBUNG VON AUSFÜHRUNGSBEISPIELEN

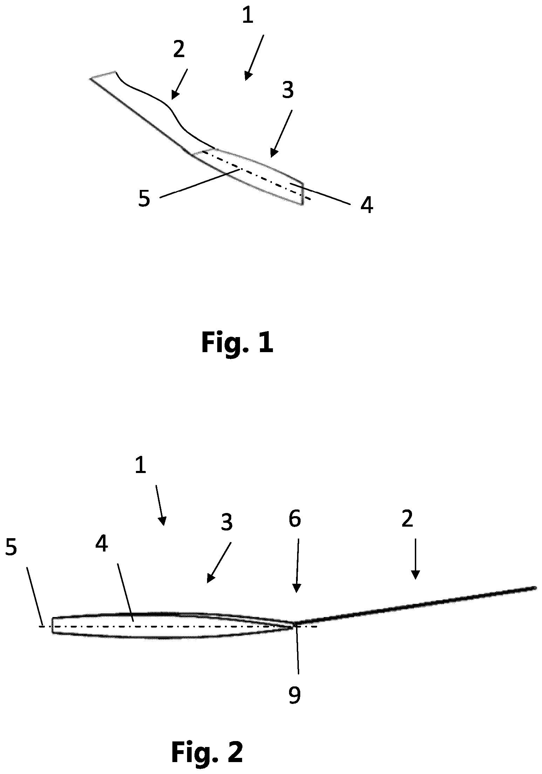

Fig. 1 zeigt eine perspektivische Ansicht eines Verwirbelungselements 1.

Das Verwirbelungselement 1 ist zur Verwirbelung einer Fluidströmung ausgebildet und für ein aerodynamisches Profil vorgesehen. Es weist einen hier lediglich abschnittsweise dargestellten Befestigungsabschnitt 2 auf, der zur Befestigung an einer Profiloberfläche ausgebildet ist. Mit dem Befestigungsabschnitt 2 ist ein strömungsaktiver Abschnitt 3 verbundenen, welcher ein Leitblech 4 aufweist.

Das Leitblech ist mit seinem gesamten Querschnitt um eine gemeinsame Achse 5 verdreht ausgebildet. Damit ist es in der Lage, eine entlang des Leitblechs verlaufende Strömung mit einem Drall zu versehen und so einen Wirbel zu erzeugen.

Bei der dargestellten Ausführungsform ist das Leitblech 4 in sich selbst verdreht ausgebildet, so dass die Achse 5 in dem Leitblech 4 verläuft. Es handelt sich um eine Torsion des Leitblechs 4.

Das Leitblech 4 ist hier beispielhaft um eine viertel Umdrehung, d. h. etwa 90°, um die Achse 5 verdreht ausgebildet. Vorteilhaft weist das Verwirbelungselement 1 somit keinen Hinterschnitt auf und lässt sich so leicht in großen Mengen, beispielsweise im Pressformverfahren, herstellen.

Ein Verfahren zur Herstellung eines derartigen Verwirbelungselements 1 enthält beispielsweise die Schritte des Bereitstellens eines Blechs, insbesondere eines thermoplastischen Faserverbundblechs oder eines metallischen Blechs, welches zur Ausbildung des aerodynamisch aktiven Abschnitts 3 zugeschnitten ist, des Einbringens des Blechs in ein Umformpresswerkzeug, insbesondere im Falle eines thermoplastischen Werkstoffs ein Heißumformpresswerkzeug, und des Umformens des Blechs mittels der Umformpresse durch Aufbringen der Verdrehung des Blechs um etwa 90° mit dem gesamten Querschnitt um die gemeinsame Achse 5, was durch eine entsprechende Form des Werkzeugs realisiert wird.

Selbstverständlich wären auch andere umformende Fertigungsverfahren zum Umformen des Zuschnitts denkbar. Weiterhin wären auch generative Fertigungsverfahren, insbesondere 3D Druck, oder spanende Fertigungsverfahren, insbesondere 3D Fräsen, sowie Spritzguss für die Herstellung der Kontur des Leitblechs denkbar.

Fig. 2 zeigt eine Seitenansicht des Verwirbelungselements 1 gemäß Fig. 1.

Aus dieser Ansicht erkennbar ist der aerodynamisch aktive Abschnitt 3 mit seiner Achse 5 im Vergleich zu dem Befestigungsabschnitt 2 unterschiedlich ausgerichtet. Das Verwirbelungselement 1 weist dazu einen Ausrichtungsabschnitt 6 auf, in welchem bei der dargestellten Ausführungsform beispielsweise ein den aerodynamisch aktiven Abschnitt 3 ausrichtender Knick 9 am Übergang zwischen Befestigungsabschnitt 2 und Leitblech 4 vorgesehen ist. Auf diese Weise lässt sich der aerodynamisch aktive Abschnitt 3 bzw. dessen Achse 5 unabhängig von der Kontur eines aerodynamischen Profils, auf welchem der Befestigungsabschnitt 2 befestigbar ist, ausrichten.

Der Befestigungsabschnitt 2 ist bei dieser Ausführungsform einteilig mit dem aerodynamisch aktiven Abschnitt 3 und dem Ausrichtungsabschnitt 6 ausgebildet. Es handelt sich hierbei um einen einteiligen Streifen, der aus einem gemeinsamen flachen Halbzeug, beispielsweise einem Metallblech oder einem thermoplastischen Faserverbundblech, geformt ist.

Ein Rohmaterial des Bleches kann beispielsweise als auf Rollen aufgewickeltes Blechmaterial vorgesehen sein.

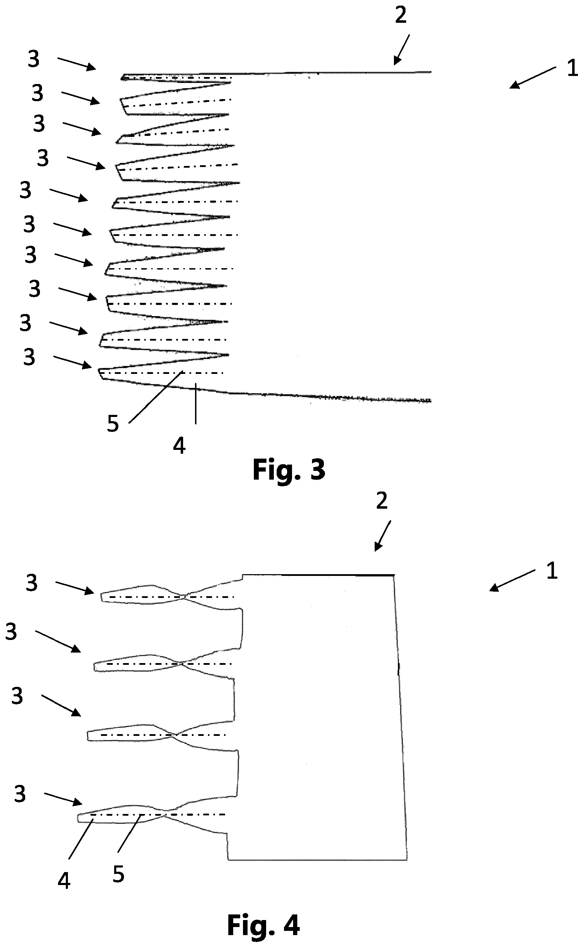

Fig. 3 zeigt eine schematische Draufsicht auf ein Verwirbelungselement 1 mit einer Vielzahl aerodynamisch aktiver Abschnitte 3.

Die Vielzahl von strömungsaktiven Abschnitten 3 ist mit einem gemeinsamen Befestigungsabschnitt 2 verbunden vorgesehen. Die strömungsaktiven Abschnitte 3 sind dazu bei diesem Ausführungsbeispiel direkt aneinander angrenzend an dem Befestigungsabschnitt 2 angeordnet. Eine Ausrichtung der jeweiligen Achsen 5 der strömungsaktiven Abschnitte 3 ist dabei im Wesentlichen gleich, d.h. nur mit geringfügigen Winkelabweichungen, beispielsweise im Bereich kleiner als 20° zur Parallelen.

Die einzelnen aerodynamisch aktiven Abschnitte 3 sind hier jeweils mit einer trapezförmigen Grundform gebildet. Beispielsweise sind dazu aus einem in der Grundform ebenen Blech an der in der Darstellung linken Seite dreieckige Ausnehmungen ausgeschnitten. Anschließend werden die Leitbleche 4 der aerodynamisch aktiven Abschnitte 3 mit einem Umformprozess um ihre jeweilige Achse 5 verdreht.

Bei der dargestellten Ausführungsform sind die Leitbleche 4 um die jeweilige Achse 5 beispielhaft um etwa eine Achtel Umdrehung, d.h. um etwa 45°, verdreht ausgebildet. Benachbarte strömungsaktive Abschnitte 3 sind dabei jeweils abwechselnd in unterschiedliche Drehrichtungen verdreht ausgebildet. Auf diese Weise lassen sich mit dem Verwirbelungselement 1 eine Vielzahl jeweils zueinander gegensinniger Wirbel erzeugen.

Fig. 4 zeigt eine schematische Draufsicht auf ein Verwirbelungselement 1 gemäß einer weiteren Ausführungsform.

Bei dieser Ausführungsform ist ebenfalls eine Vielzahl aerodynamisch aktiver Abschnitte 3 vorgesehen, die mit einem gemeinsamen Befestigungsabschnitt 2 verbunden sind. Im Unterschied zu Fig. 3 sind die aerodynamisch aktiven Abschnitte 3 mit ihren Leitblech 4 hier jedoch in regelmäßigen Abständen voneinander beabstandet angeordnet. Der Abstand beträgt hier beispielsweise eine Breite eines Leitblechs 4.

Als weiterer Unterschied sind die Leitbleche 4 bei dieser Ausführungsform im Vergleich zu Fig. 3 einerseits gleichsinnig und andererseits jeweils stärker um die Achse 5 verdreht ausgebildet. Beispielhaft handelt es sich hier jeweils um etwa eine halbe Verdrehung, d.h. um eine Verdrehung von etwa 180°.

Eine derartige Verdrehung ist mit einem Verfahren zur Herstellung eines Verwirbelungselements 1 realisierbar, welches die Schritte des Bereitstellens eines Blechs, insbesondere eines thermoplastischen Faserverbundblechs oder eines metallischen Blechs, welches zur Ausbildung der aerodynamisch aktiven Abschnitte 3 zugeschnitten ist; des Einbringen des Blechs in ein Werkzeug, wobei das Werkzeug als mit einer Rotationsachse eines Rotationsaktuators, insbesondere eines Rotationsmagneten, verbundene Aufnahme ausgebildet ist; und des Umformens des Blechs mittels des Rotationsaktuators, insbesondere eines Rotationsmagneten, durch zumindest abschnittsweises Aufbringen einer Verdrehung des Blechs um bis zu 180°, mit seinem gesamten Querschnitt um eine gemeinsame Achse 5 durch Drehen des Rotationsmagneten, enthält.

Insbesondere kann eine zu der Anzahl der zu verdrehenden Abschnitte korrespondierende Anzahl von Rotationsmagneten vorgesehen sein. Entsprechend können sämtliche aerodynamisch aktiven Abschnitte simultan verdreht werden, sodass vergleichsweise hohe Taktzahlen und damit kurze Produktionszeiten möglich sind.

Je nach Material kann das Blech, zumindest im Bereich der zu verdrehenden Abschnitte, vor dem Verdrehen erwärmt werden, beispielsweise mittels eines Kontaktwärmers oder mittels Heißluft. Auf diese Weise ist auch eine Warmumformung mittels der Rotationsmagneten ermöglicht.

Bei weiteren Ausführungsformen kann alternativ oder zusätzlich zu Rotationsmagneten zum Verdrehen auch ein Industrieroboter eingesetzt werden. Entsprechend wäre die Aufnahme mit einer Rotationsachse eines Industrieroboters gekoppelt und die Verdrehung durch Rotation der Rotationsachse vorgenommen. In diesem Fall wäre insbesondere ein sequenzielles Verdrehen der zu verdrehenden Abschnitte nacheinander mit dem Industrieroboter denkbar.

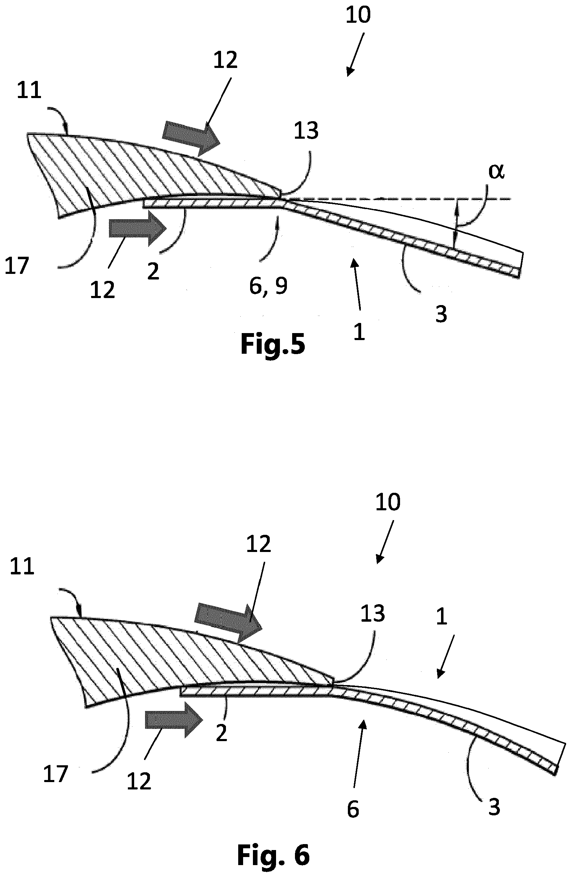

Fig. 5 zeigt eine schematische Schnittansicht eines aerodynamischen Profils 10.

Das aerodynamische Profil 10 ist hier beispielhaft als Rotorblatt 17 ausgebildet und lediglich im Bereich seiner Profilendkante 13 dargestellt.

Das aerodynamische Profil 10 weist eine sich an der Oberseite und an der Unterseite sowie über die Profilendkante 13 erstreckende Profiloberfläche 11 auf. In der dargestellten Ausführungsform stellt die Unterseite des aerodynamischen Profils eine Druckseite und die Oberseite eine Unterdruckseite dar.

An der Profiloberfläche 11 ist ein Verwirbelungselement 1 angebracht. Bei der dargestellten Ausführungsform ist dazu der Befestigungsabschnitt 2 an der Unterseite bzw. Druckseite im Bereich der Profilendkante 13 befestigt. Der strömungsaktive Abschnitt 3 ist zur Verwirbelung einer entlang der Profiloberfläche 11 verlaufenden Strömung 12 ausgerichtet, welche hier schematisch mit Pfeilen symbolisiert ist. Bei der dargestellten Ausführungsform steht der strömungsaktive Abschnitt 3 über die Profilendkante 13 hinaus. Alleine durch die Präsenz des aerodynamisch aktiven Abschnitts 3 im Endkantenbereich wird, ähnlich wie bei herkömmlichen Serrations, bereits der Endkanten-Wirbel reduziert. Der strömungsaktive Abschnitt 3 ist jedoch mit seiner Verdrehung zusätzlich zur Erzeugung eines den Endkanten-Wirbel reduzierenden Wirbels vorgesehen. Auf diese Weise wird ein im Bereich der Endkante 13 entstehender Endkanten-Wirbel zusätzlich reduziert.

Ferner ist der aerodynamisch aktive Abschnitt 3 zu dem Befestigungsabschnitt 2 und folglich zu der Profiloberfläche 11 mittels des Ausrichtungsabschnitts 6, der hier beispielhaft einen Knick 9 aufweist, mit einem Winkel $\alpha$ nach unten abgewinkelt ausgerichtet. Auf diese Weise wird neben der Wirbelerzeugung und Beeinflussung des Endkantenwirbels eine Art lokale Verlängerung des Profils erreicht, was zusätzlichen Auftrieb erzeugt.

Fig. 6 zeigt eine schematische Schnittansicht eines aerodynamischen Profils 10 gemäß einer weiteren Ausführungsform.

Diese Ausführungsform unterscheidet sich von Fig. 5 dadurch, dass der Ausrichtungsabschnitt 6 anstatt eines Knicks mit einer lang gezogenen Krümmung gebildet ist, welche sich in den aerodynamisch aktiven Abschnitt hinein erstreckt.

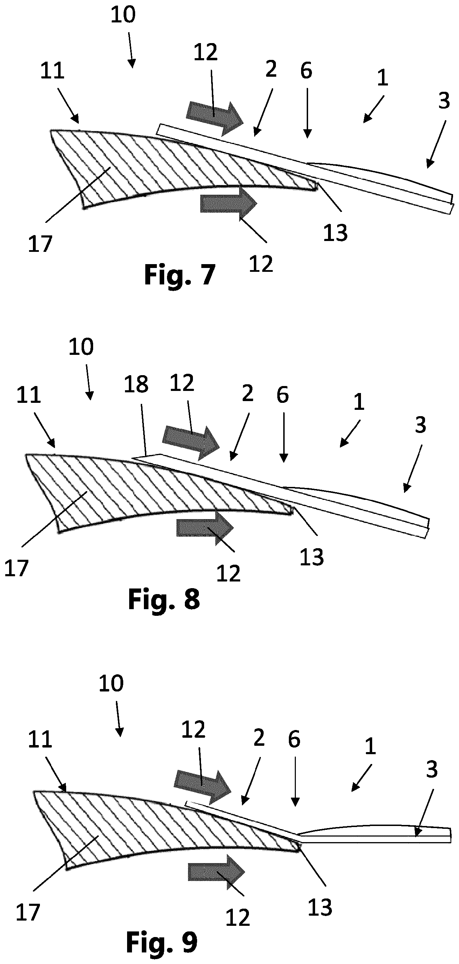

Fig. 7 zeigt eine schematische Schnittansicht eines aerodynamischen Profils 10 gemäß einer noch weiteren Ausführungsform.

Diese Ausführungsform unterscheidet sich von Fig. 5 dadurch, dass der Befestigungsabschnitt 2 hier an der Oberseite des Profils, das heißt an der Unterdruckseite des Rotorblatts 17, befestigt ist. Darüber hinaus führt der aerodynamisch aktive Abschnitt 3 bei dieser Ausführungsform im Wesentlichen die Kontur der Profiloberseite 11 über die Profilendkante 13 hinweg fort. Auf diese Weise wird eine im Vergleich zu Fig. 5 vergleichbare Stellung des aerodynamisch aktiven Abschnitts 3 erreicht. Der Ausrichtungsabschnitt 6 ist somit bei dieser Ausführungsform im Wesentlichen gerade vorgesehen.

Fig. 8 zeigt eine schematische Schnittansicht eines aerodynamischen Profils 10 gemäß einer weiteren Ausführungsform.

Diese Ausführungsform unterscheidet sich von Fig. 7 durch eine Gestalt der vorderen Kante 18 des Befestigungsabschnitts 2, welche mit einer Fase versehen ist. Auf diese Weise wird der Übergang geglättet und so eine etwaige Wirbelbildung an der Kante 18 vermieden, was den Luftwiderstand verringert.

Fig. 9 zeigt eine schematische Schnittansicht eines aerodynamischen Profils gemäß einer weiteren Ausführungsform.

Diese Ausführungsform basiert ebenfalls auf der Ausführungsform nach Fig. 7, wobei hier der aerodynamisch aktive Abschnitt 3 nach oben abgewinkelt ausgerichtet ist. Der Ausrichtungsabschnitt 6 umfasst somit einen Knick nach oben. Auf diese Weise ist der aerodynamisch aktive Abschnitt 3 im Vergleich zu Fig. 7 stärker auf den Endkanten-Wirbel ausgerichtet. Somit wird hier eine stärkere Lärmreduktion erreicht.

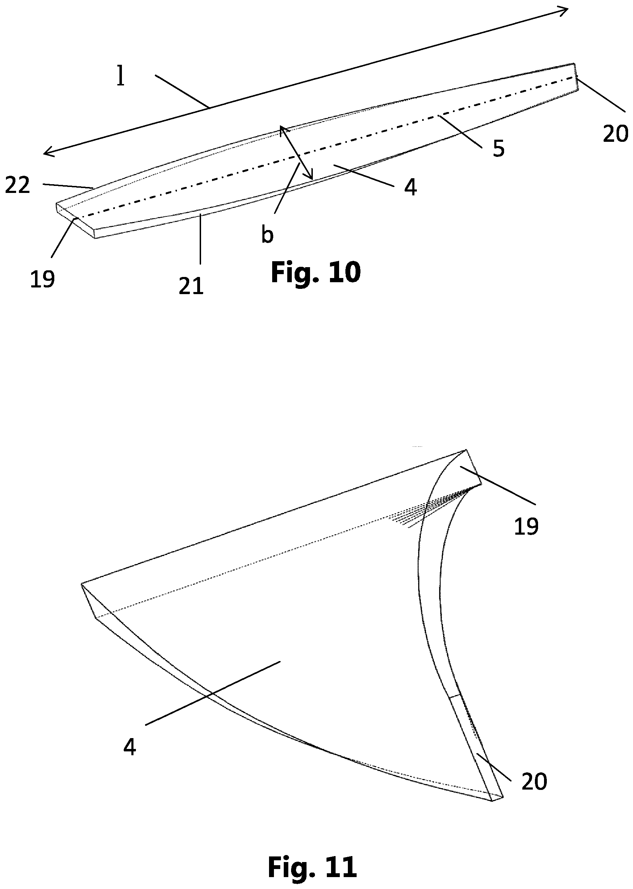

Fig. 10 zeigt eine perspektivische Detailansicht eines Leitblechs 4 gemäß einer Ausführungsform.

Das Leitblech 4 ist mit einem umgeformten flachen Halbzeug bzw. Blech gebildet, welches über seine Länge kontinuierlich um eine zentrale Achse 5 um insgesamt eine viertel Umdrehung verdreht ausgebildet ist.

In seiner Grundform ist das Blech als Zuschnitt vorgesehen, mit einer Länge 1 und einer Breite b.

Bei der dargestellten Ausführungsform ist die Länge 1 deutlich größer als die Breite b. Dabei weist das Leitblech 4 zwei kurze Kanten 19, 20 auf, die gerade ausgebildet sind. Ferner sind zwei lange Kanten 21, 22 vorgesehen, die mit einem Kurvenverlauf gebildet sind. Der Kurvenverlauf ist insbesondere mit einer stetigen Krümmung versehen, die eine bauchige Kontur der Grundform des Blechs erzeugt. Die vordere kurze Kante 19 ist dabei breiter als die hintere kurze Seite 20, sodass eine breiteste Stelle bzw. ein Bauch näher an der vorderen kurzen Kante 19 liegt.

Zur Herstellung des Leitblechs 4 kann das Blech in seiner Grundform entweder in die entsprechende Form gepresst werden oder mittels eines rotatorischen Aktuators tordiert werden. Insbesondere kann das Herstellungsverfahren angepasst an den Werkstoff des Blechs vorgesehen sein. Neben Metallen wie Aluminium, Titan, Edelstahl oder dergleichen, kommen insbesondere auch Kunststoffmaterialien, vorzugsweise Faserverbundmaterialien, insbesondere thermoplastische Faserverbundmaterialien, als Werkstoff für das Leitblech 4 in Frage. Insbesondere für Windkraftanlagen sind derartige Faserverbundmaterialien aufgrund der im Vergleich zu den üblicherweise für die Rotorblätter eingesetzten Materialien sehr ähnlichen Wärmedehnungskoeffizienten vorteilhaft. Auf diese Weise bleibt die Befestigungsfläche des Befestigungsabschnitts, insbesondere im Fall einer adhäsiven Befestigung, weniger Spannungen ausgesetzt und damit dauerhaft haltbar. Vorzugsweise werden UV- und witterungsbeständige Kunststoffe eingesetzt, um eine Lebensdauer von zumindest 5, insbesondere zumindest 10, bevorzugt zumindest 20 Jahren zu gewährleisten.

Das Leitblech 4 ist hier als aerodynamisch aktiver Abschnitt 3 für ein Verwirbelungselement 1 ausgebildet und unabhängig von dem Befestigungsabschnitt 2 dargestellt. Zur Herstellung eines Verwirbelungselements 1 ist das Leitblech 4 mit einem Befestigungsabschnitt verbindbar, insbesondere durch ein Befestigungsmittel, durch Formschluss und/oder durch Stoffschluss, beispielsweise durch Kleben, Schrauben und/oder Nieten.

Fig. 11 zeigt eine Rückansicht des Leitblechs 4 nach Fig. 10.

Erkennbar ist hier zusätzlich zu der Verdrehung um 90° auch ein seitlicher Versatz der im Vordergrund dargestellten schmaleren hinteren kurzen Seite zu der breiteren vorderen kurzen Seite. Ein das Leitblech 4 bildende flache Halbzeug ist dazu bereits zur Herstellung des Leitblechs 4 in einer ebenen Projektion leicht asymmetrisch zugeschnitten.

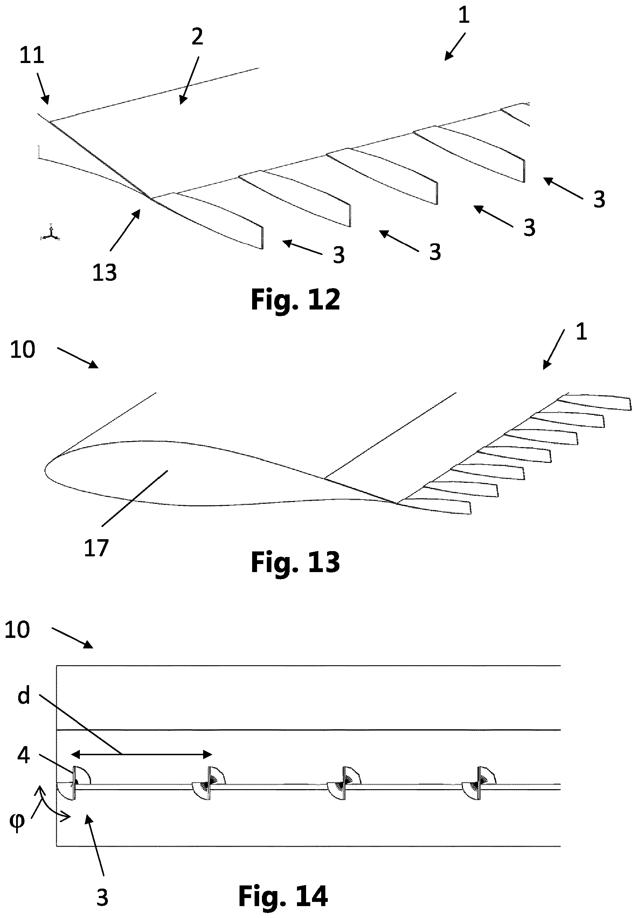

Fig. 12 zeigt eine perspektivische Ansicht des Bereichs einer Profilendkante 13 mit einem Verwirbelungselement 1.

Das Verwirbelungselement 1 ist mit einem gemeinsamen Befestigungsabschnitt 2 und einer Vielzahl aerodynamisch aktiver Abschnitte 3 gebildet. Die Ausbildung ist dabei im Wesentlichen wie in Bezug auf Fig. 1 beschrieben vorgesehen, wobei der Befestigungsabschnitt 2 in seiner Breite fortgesetzt ist und in regelmäßigen Abständen weitere parallele aerodynamisch aktive Abschnitte 3 daran vorgesehen sind.

Die aerodynamisch aktiven Abschnitte 3 sind hier jeweils mit einem beispielhaft in seiner Grundform rechteckig zugeschnittenen Abschnitt geformt, der mit einer Verdrehung um etwa 90° als Leitblech 4 umgeformt und einteilig mit dem gemeinsamen Befestigungsabschnitt 2 ausgebildet ist.

Der Befestigungsabschnitt 2 ist flächig auf der an die Profilendkante 13 angrenzenden Profiloberfläche 11 angebracht. Beispielsweise ist der Befestigungsabschnitt 2 stoffschlüssig oder adhäsiv auf der Profiloberfläche 11 befestigt. Auf diese Weise sind derartige Verwirbelungselemente 1 einfach zu installieren und insbesondere auch an bestehenden aerodynamischen Profilen, beispielsweise von Windkraftanlagen, leicht nachzurüsten.

Fig. 13 zeigt eine perspektivische Ansicht eines aerodynamischen Profils 10 mit einer Profilendkante 13 gemäß Fig. 12.

Das aerodynamische Profil 10 ist hier in seiner Breite lediglich abschnittsweise dargestellt und in einer beliebigen Breite weiterführbar. Insbesondere kann dabei auch nur ein Teil der Breite des aerodynamischen Profils 10 mit dem Verwirbelungselement 1 versehen sein. Beispielsweise kann bei einem Rotorblatt einer Windkraftanlage die radial äußere Hälfte mit einem oder mehreren Verwirbelungselementen 1 versehen sein.

Fig. 14 zeigt eine Rückansicht des aerodynamischen Profils 10 gemäß Fig. 13.

Aus dieser Ansicht geht ein Verdrehwinkel φ der Leitbleche 4 der aerodynamisch aktiven Bereiche von 90° sowie deren regelmäßige Beabstandung mit einem Abstand d anschaulich hervor. Die Abstände d sind derart bemessen, dass pro Meter Profilbreite eine konstante Anzahl aerodynamisch aktiver Bereiche 3 gleichmäßig verteilt angeordnet ist.

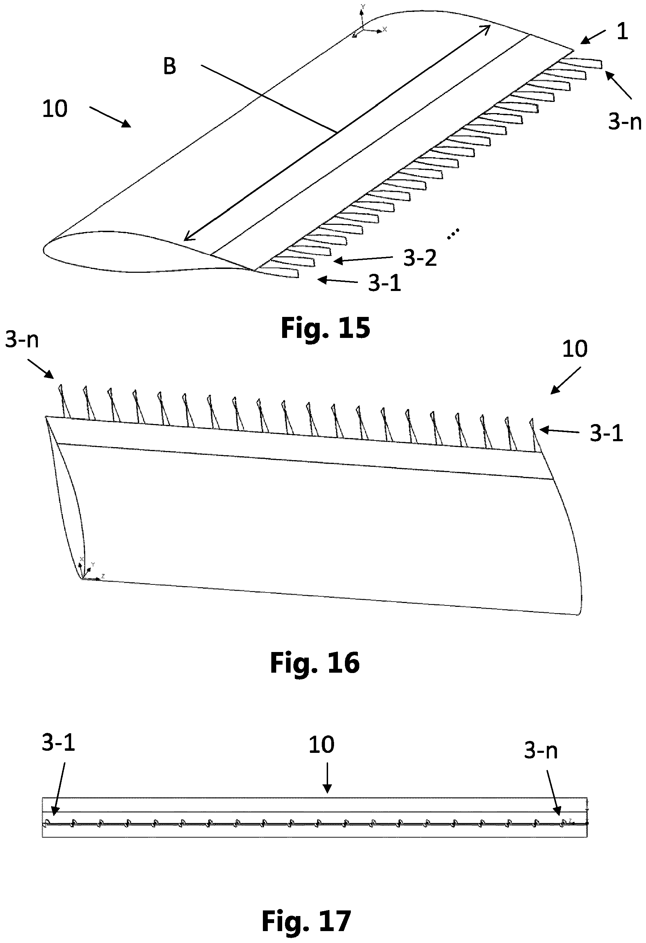

Fig. 15 zeigt eine perspektivische Ansicht eines aerodynamischen Profils 10 gemäß einer weiteren Ausführungsform.

Fig. 16 zeigt eine Draufsicht auf das aerodynamische Profil 10 gemäß Fig. 15.

Fig. 17 zeigt eine Rückansicht des aerodynamischen Profils 10 gemäß Fig. 15 und 16.

Gemäß dieser Ausführungsform ist das aerodynamische Profil 10 mit einer vorbestimmten Breite B, hier rein beispielhaft von 1 m, und einer vorbestimmten Anzahl von aerodynamisch aktiven Abschnitten 3-1, 3-2, ..., 3-n, hier rein beispielhaft 20 Stück, versehen. Entsprechend beträgt eine Dichte aerodynamisch aktive Bereiche n/B, hier beispielhaft 20 Stück pro Meter.

Bei weiteren Ausführungsformen kann die Dichte, je nach Anwendungsbereich, im Bereich von 1 bis 1000 pro 1 m liegen. Beispielsweise liegt ein derartiger Bereich für Windkraftanlagen vorzugsweise bei 5 bis 50 Stück pro 1 m.

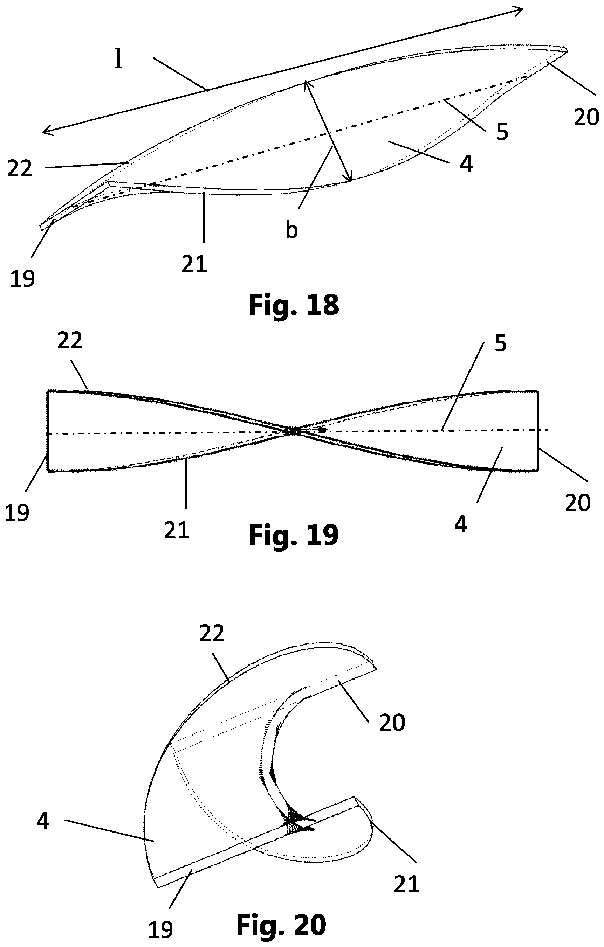

Fig. 18 zeigt eine perspektivische Ansicht eines Leitblechs 4 gemäß einer weiteren Ausführungsform.

Fig. 19 zeigt eine Draufsicht auf das Leitblech 4 nach Fig. 18.

Fig. 20 zeigt eine Rückansicht des Leitblechs 4 nach Fig. 18 und 19.

Das Leitblech 4 ist ebenfalls mit einem umgeformten flachen Halbzeug bzw. Blech gebildet, welches über seine Länge kontinuierlich um eine zentrale Achse 5 verdreht ausgebildet ist. Die Verdrehung beträgt hier eine halbe Umdrehung bzw. ein Verdrehwinkel φ 180°.

In seiner Grundform ist das Blech als parallelogrammförmiger, hier beispielhaft als rechteckiger, Zuschnitt vorgesehen, mit einer Länge 1 und einer Breite b. Bei der dargestellten Ausführungsform ist die Länge 1 um ein Vielfaches größer als die Breite b. Dabei weist das Leitblech 4 zwei kurze Kanten 19, 20 auf, die gerade ausgebildet sind. Ferner sind zwei lange Kanten 21, 22 vorgesehen, die ebenfalls gerade gebildet sind.

Zur Herstellung des Leitblechs 4 kann das Blech in seiner Grundform mittels eines rotatorischen Aktuators tordiert werden. Insbesondere kann das Herstellungsverfahren angepasst an den Werkstoff des Blechs vorgesehen sein. Neben Metallen wie Aluminium, Titan, Edelstahl oder dergleichen, kommen insbesondere auch Kunststoffmaterialien, vorzugsweise Faserverbundmaterialien, insbesondere thermoplastische Faserverbundmaterialien, als Werkstoff für das Leitblech 4 in Frage, wie in Bezug auf Fig. 10 bereits beschrieben.

Das Leitblech 4 ist hier ebenfalls als aerodynamisch aktiver Abschnitt eines Verwirbelungselements 1 ausgebildet und unabhängig von einem Befestigungsabschnitt 2 dargestellt. Zur Herstellung eines Verwirbelungselements 1 ist das Leitblech 4 somit ebenfalls mit einem Befestigungsabschnitt 2 verbindbar.

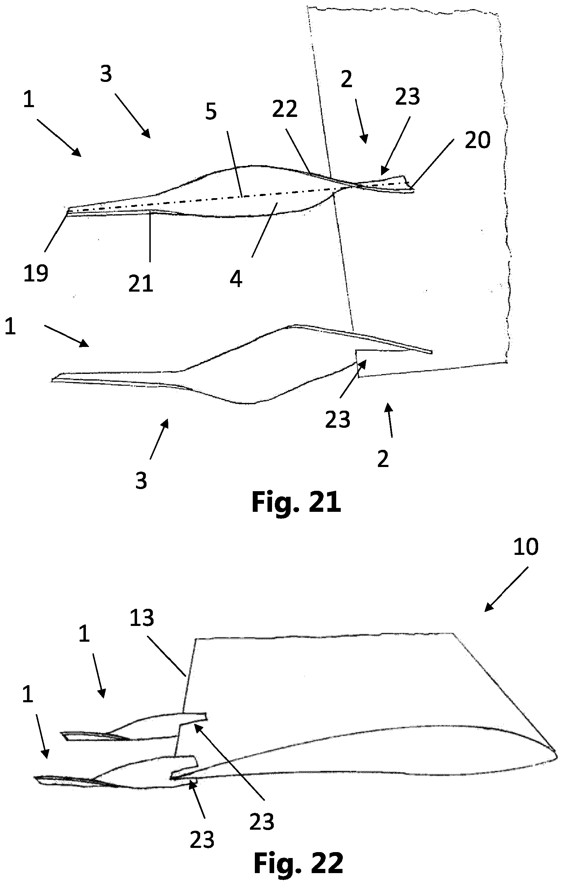

Fig. 21 zeigt eine schematische Draufsicht von Verwirbelungselementen 1 gemäß einer weiteren Ausführungsform.

Schematisch dargestellt sind hier zwei nebeneinander angeordnete Verwirbelungselemente 1.

Die Verwirbelungselemente 1 sind wie in Bezug auf die Ausführungsform nach Fig. 10 erläutert mit einem bauchig geformten ebenen Halbzeug gebildet, welches zwei kurze gerade Kanten 19, 20 und zwei lange kurvenförmige Kanten 21, 22 aufweist. Im Unterschied zu Fig. 10 ist hier jedoch eine Verdrehung um die Achse 5 um eine halbe Umdrehung vorgesehen.

Darüber hinaus ist bei dieser Ausführungsform der Befestigungsabschnitt 2 direkt in dem Leitblech 4 des aerodynamisch aktiven Abschnitts 3 vorgesehen. Das Leitblech 4 weist dazu eine Ausnehmung 23 auf, welche auf eine hier schematisch angedeutete Kante eines aerodynamischen Profils aufsteckbar und zur form- und/oder stoffschlüssigen Verbindung mit dem Profil vorgesehen ist.

Fig. 22 zeigt eine schematische Seitenansicht eines Abschnitts eines aerodynamischen Profils 10 mit Verwirbelungselementen 1 gemäß Fig. 21.

Die Verwirbelungselemente 1 sind mit ihrer Ausnehmung 23 an dem aerodynamischen Profil 10 an der Profilendkante aufgesteckt und damit stoffschlüssig, beispielsweise mittels einer Klebe- oder Schweißverbindung, verbunden. Die Ausnehmung 23 ist dazu angepasst an die Form der Profilendkante 13 ausgebildet.

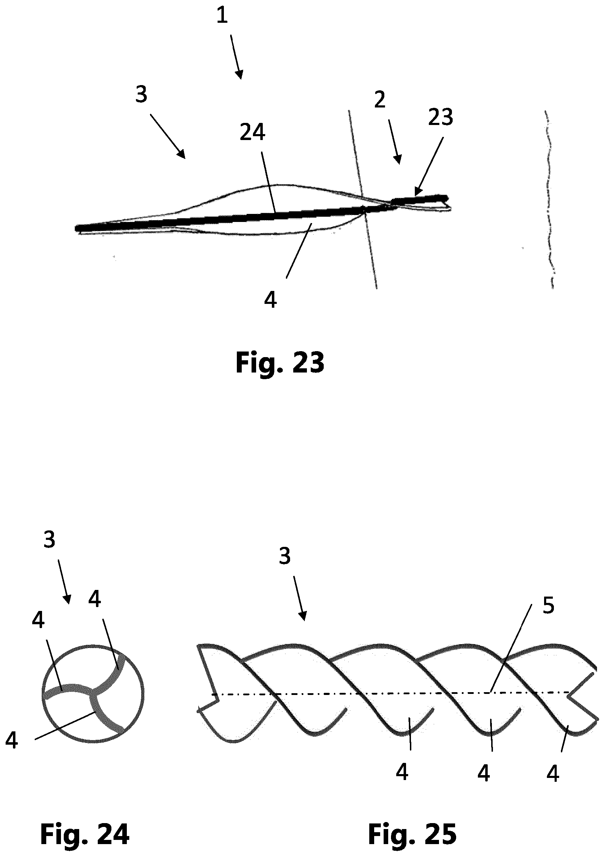

Fig. 23 zeigt eine schematische Draufsicht auf ein Verwirbelungselement 1 gemäß einer weiteren Ausführungsform.

Das Verwirbelungselement 1 gemäß dieser Ausführungsform unterscheidet sich von der Ausführungsform nach Fig. 21 durch eine entlang der Achse 5 verlaufende zentrale Verstärkung 24 des Verwirbelungselements 1. Es kann sich dabei insbesondere um eine massive Materialverdickung oder um eine röhrenförmige Verstärkung handeln. Die Verdrehung des Leitblechs 4 verläuft somit um die Verstärkung 24.

Fig. 24 zeigt eine Vorderansicht eines aerodynamisch aktiven Abschnitts 3 eines Verwirbelungselements 1 mit mehreren Leitblechen 4.

Fig. 25 zeigt eine schematische Seitenansicht des aerodynamisch aktiven Abschnitts 3 gemäß Fig. 24.

An einem aerodynamisch aktiven Abschnitt 3 sind hier mehrere Leitbleche 4, beispielhaft drei Leitbleche 4, vorgesehen. Jedes der Leitbleche 4 verläuft schraubenförmig verdreht um eine gemeinsame zentrale Achse 5.

Bei der dargestellten Ausführungsform sind die Leitbleche 5 im Zentrum des aerodynamisch aktiven Abschnitts 3, d.h. im Bereich der Achse 5, miteinander direkt in einem Stoß verbunden. Bei weiteren Ausführungsformen wäre auch hier denkbar, wie in Bezug auf Fig. 23 beschrieben, eine zentrale Verstärkung 24 vorzusehen, um welche die Leitbleche 4 verdreht sind.

Beispielsweise kann ein derartiges Bauteil in einem Extrusionsverfahren hergestellt werden. Die Verdrehung kann mittels Torsion während oder in Anschluss an die Extrusion aufgebracht werden. Selbstverständlich sind auch generative Herstellungsverfahren, wie beispielsweise 3D-Druck, 3D-Bearbeitungsverfahren, beispielsweise 3D-Fräsen, oder Spritzguss als Herstellungsverfahren möglich.

Ein derartiger aerodynamisch aktiver Abschnitt 3 kann insbesondere als rotierender aerodynamisch aktiver Abschnitt ausgelegt sein und entsprechend um die Achse 5 rotierbar an einem Befestigungsabschnitt 2, der in diesem Fall beispielsweise sockelartig ausgebildet sein kann, angebracht sein.

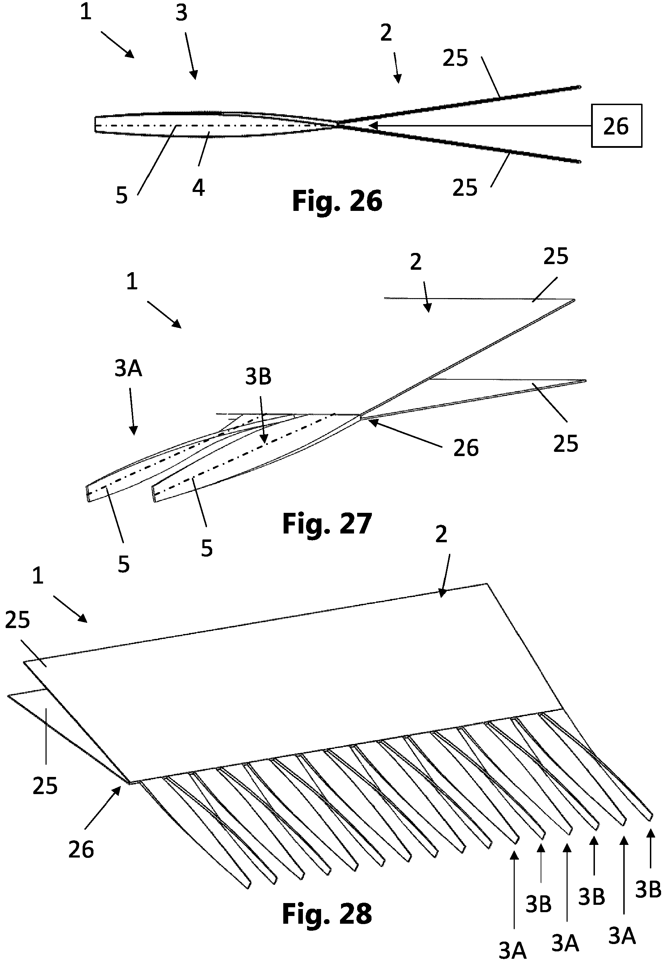

Fig. 26 zeigt eine Seitenansicht eines Verwirbelungselements 1 gemäß einer weiteren Ausführungsform.

Bei dieser Ausführungsform weist das Verbindungselement 1 einen Befestigungsabschnitt 2 auf, welcher zwei V-förmig zueinander stehende Schenkel 25 aufweist. Im Bereich eines die beiden Schenkel 25 verbindenden Stoßbereichs 26 ist das Leitblech 4 an der breiteren kurzen Kante 19 mit dem Befestigungsabschnitt 2 verbunden.

Darüber hinaus weist das Verwirbelungselement 1 an den Stoßbereich 26 direkt anschließend einen aerodynamisch aktiven Abschnitt 3 auf, der mit einem Leitblech 4 gemäß Fig. 10 gebildet ist. Bei weiteren Ausführungsformen wäre auch ein aerodynamisch aktiver Abschnitt 3 gemäß einem weiteren Ausführungsbeispiel denkbar.

Fig. 27 zeigt eine Seitenansicht eines Verwirbelungselements 1 gemäß einer noch weiteren Ausführungsform.

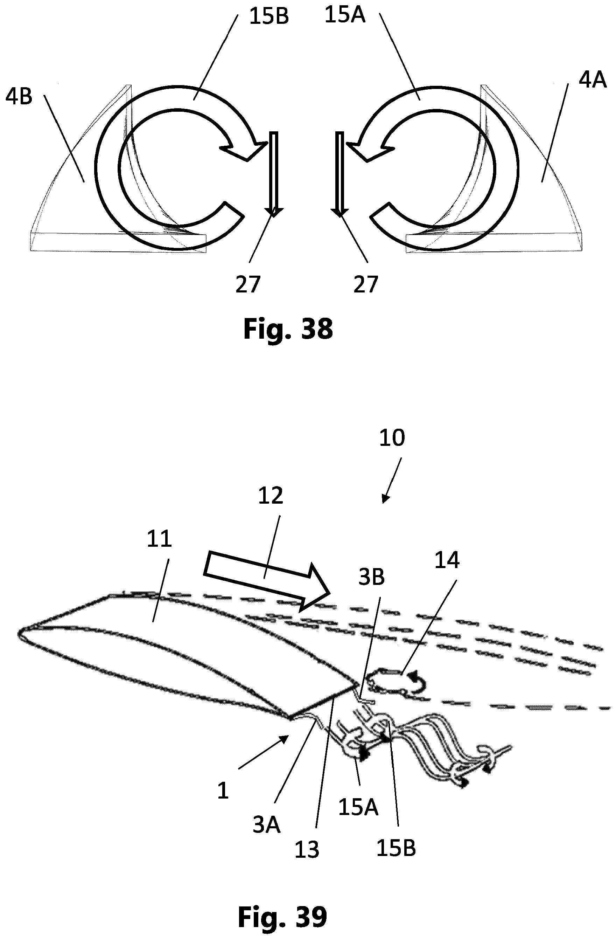

Aus der dargestellten Ansicht ist eine plattenartige Form der Schenkel 25 erkennbar, die zur adhäsiven Befestigung auf einer Profiloberfläche vorgesehen sind. An die Schenkel 25 anschließend sind im Stoßbereich 26 zwei benachbarte aerodynamisch aktive Abschnitte 3A, 3B vorgesehen. Diese sind mit ihren Achsen 5 parallel ausgerichtet, jedoch mit einer gegensinnigen Verdrehung ausgebildet. Auf diese Weise wird eine Reibung benachbarter Wirbel verringert, da diese an ihren Einflussbereichen nahezu gleichgerichtete Geschwindigkeitsvektoren aufweisen. Dies wird in Bezug auf Fig. 38 noch näher erläutert.

Fig. 28 zeigt eine perspektivische Ansicht eines Verwirbelungselements 1 gemäß einer weiteren Ausführungsform.

Diese Ausführungsform basiert auf der Ausführungsform nach Fig. 27 und weist eine Vielzahl jeweils gegensinnig angeordneter benachbarter aerodynamisch aktiver Abschnitte 3A, 3B auf.

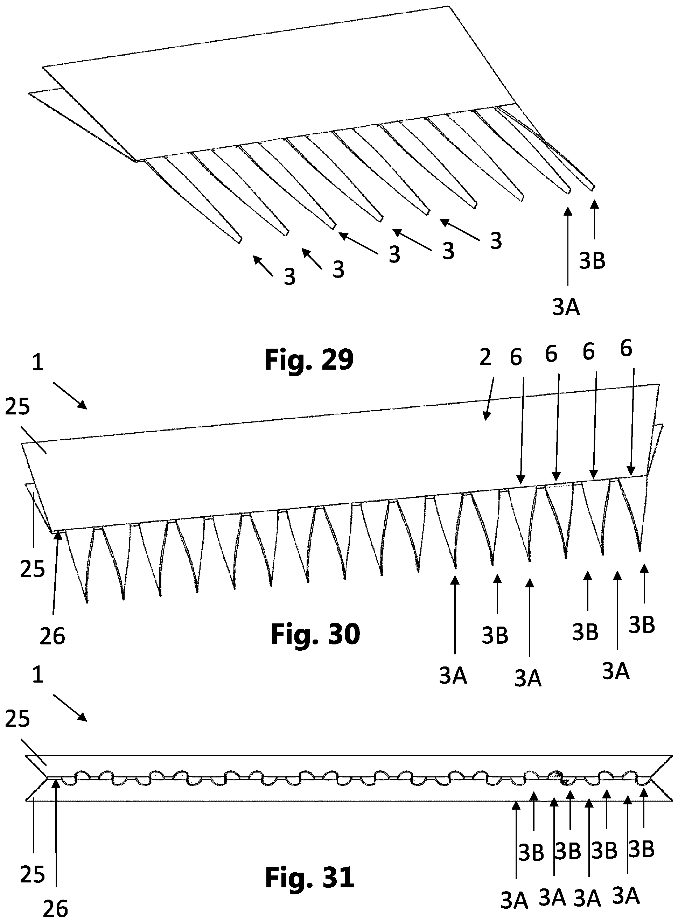

Fig. 29 zeigt eine perspektivische Ansicht eines Verwirbelungselements 1 gemäß einer noch weiteren Ausführungsform.

Bei dieser Ausführungsform sind die Anordnungen aerodynamisch aktiver Abschnitte 3, 3A, 3B lokal verschieden vorgesehen. Über einen Teil der Breite des Verwirbelungselements 1 sind die aerodynamisch aktiven Abschnitte voneinander beabstandet, etwa um die Breite eines Leitblechs 4 wie in Bezug auf Fig. 14 beschreiben, und mit ihren Leitblechen 4 parallel zueinander ausgerichtet. Die Leitbleche 4 sind dabei jeweils in der gleichen Richtung verdreht.

In einem zweiten Abschnitt, der hier rein illustrativ an der in der Darstellung rechten Seite des Verwirbelungselements 1 vorgesehen ist, wechselt die Anordnung in eine direkt nebeneinander positionierte Anordnung benachbarter aerodynamisch aktiver Abschnitte 3A, 3B, deren Leitbleche 4A, 4B jeweils eine gegensinnige Verdrehung aufweisen. Dargestellt ist hier lediglich ein Paar derartiger benachbarter gegensinnig verdrehter aerodynamisch aktiver Abschnitte 3A, 3B. Selbstverständlich kann der Abschnitt gegensinnig verdrehter aerodynamisch aktiver Abschnitte 3A, 3B in beliebiger Länge bzw. mit einer Vielzahl derartiger Paare fortgesetzt sein.

Fig. 30 zeigt eine perspektivische Ansicht eines Verwirbelungselements 1 gemäß einer weiteren Ausführungsform.

Diese Ausführungsform unterscheidet sich von der Ausführungsform nach Fig. 28 durch die Grundformen der Leitbleche 4, welche hier eine Trapezform aufweisen.

Gleich wie in Bezug auf Fig. 28 beschrieben handelt es sich um eine Vielzahl benachbarter aerodynamisch aktiver Abschnitte 3A, 3B, die zueinander gegensinnig verdrehte Leitbleche 4 aufweisen. Ein Verdrehwinkel $\varphi$ ist hier

ebenfalls mit 90° bzw. als Viertel Umdrehung vorgesehen.

Im Unterschied zu Fig. 28 sind die aerodynamisch aktiven Abschnitte 3A, 3B hier ausgehend von dem Stoßbereich 26, der hier auch einen Ausrichtungsabschnitt 6 bildet, zusätzlich abgewinkelt. Auf diese Weise lässt sich eine Anordnung mit den in Bezug auf die Figuren 5 und 9 beschriebenen Effekten erzielen.

Beispielhaft sind die auf eine Länge von einem Meter hier acht Paare 3A, 3B, d.h. eine Dichte von 16 aerodynamisch aktiven Abschnitten pro 1 m, vorgesehen.

Fig. 31 zeigt eine Rückansicht des Verwirbelungselements 1 gemäß einer weiteren Ausführungsform.

Bei dieser Ausführungsform ist eine im Vergleich zu Fig. 28 und 30 erhöhte Anzahl von gegensinnig verdrehten aerodynamisch aktiven Abschnitten 3A, 3B vorgesehen, welche entsprechend kleiner dimensioniert sind. Somit ist hier eine höhere Dichte aerodynamisch aktiver Abschnitte 3A, 3B vorgesehen, beispielhaft 36 Stück pro 1 m.

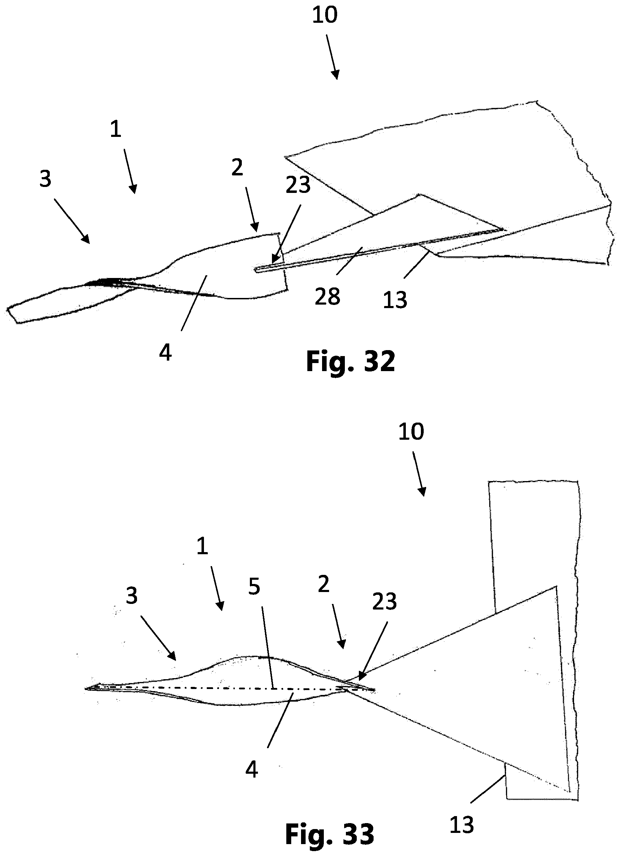

Fig. 32 zeigt eine schematische perspektivische Ansicht eines Abschnitts eines aerodynamischen Profils 10 gemäß einer weiteren Ausführungsform.

Das aerodynamische Profil 10 weist bei dieser Ausführungsform eine herkömmliche gezackte Struktur 28, d.h. gezackte Fortsätze bzw. Serrations, an der Profilendkante 13, auf. An diese Fortsätze ist nun ein Verwirbelungselement 1 angebracht.

Bei der dargestellten Ausführungsform ist das Verwirbelungselement 1 im Wesentlichen gemäß Fig. 21 ausgebildet und an der Endkante eines Fortsatzes 28 aufgesteckt und beispielsweise stoffschlüssig damit verbunden.

Fig. 33 zeigt eine Draufsicht des aerodynamischen Profils gemäß Fig. 32.

Aus dieser Ansicht ist eine schräge Ausrichtung des aerodynamisch aktiven Abschnitts 3 bzw. dessen Achse 5 erkennbar, welche schräg zu der Profilendkante 13 steht. Das Leitblech 4 ist dabei zur schrägen Anströmung asymmetrisch ausgebildet .

Vorzugsweise ist ein das Leitblech 4 bildendes flaches Halbzeug bereits zur Herstellung des Leitblechs 4 in einer ebenen Projektion asymmetrisch zugeschnitten vorgesehen.

Dies hat den Hintergrund, dass eine Anströmung bei rotierenden Profilen praktisch schräg zur Profilsehne verläuft. Mit dem schrägen Leitblech 4 bzw. der schrägen Ausrichtung des aerodynamisch aktiven Abschnitts 3 wird dieser schrägen Ausrichtung der Anströmung zur Vermeidung von Strömungswiderständen entsprochen.

Durch die vergleichsweise lange Auslenkung über den Fortsatz 28 ist dieser Effekt hier stärker als bei direkt auf der Profiloberfläche 11 angebrachten aerodynamisch aktiven Abschnitten. Selbstverständlich ist dieses Konzept der schrägen Anströmung bzw. schrägen Ausrichtung des aerodynamisch aktiven Abschnitts 3, insbesondere der schrägen Ausbildung des Leitblechs 4, zur Verringerung von Widerständen auch auf direkt an einem aerodynamischen Profil 10 angebrachte Verwirbelungselemente 1 übertragbar.

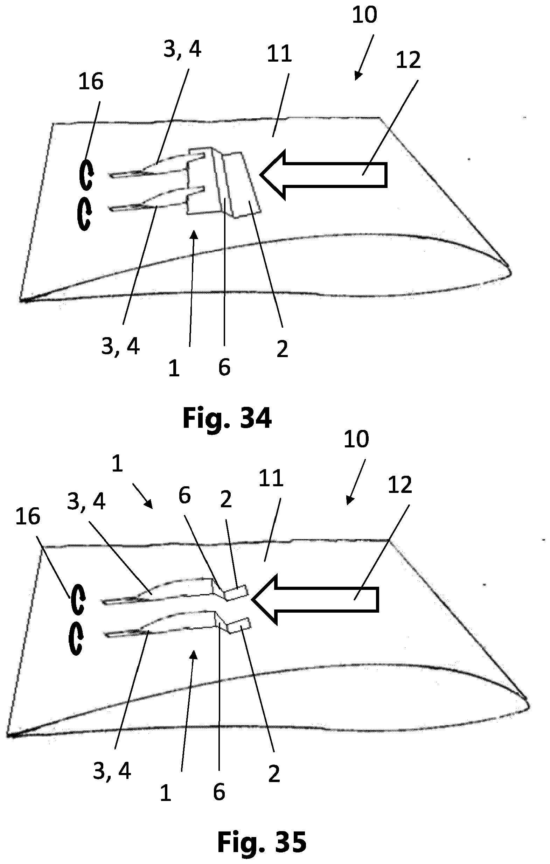

Fig. 34 zeigt eine schematische Seitenansicht eines aerodynamischen Profils gemäß einer weiteren Ausführungsform.

Bei dieser Ausführungsform ist ein Verwirbelungselement 1 auf der Profiloberfläche 11 etwa in der Mitte des Profilquerschnitts angebracht. Der strömungsaktive Abschnitt 3 ist somit parallel zu der Profiloberfläche 11 angeordnet und zur Erzeugung eines einen Strömungsabriss von der Profiloberfläche 11 vermeidenden Wirbels 16 vorgesehen. Bei dieser Ausführungsform dienen die Verwirbelungselemente somit vorwiegend der Erzeugung einer turbulenten Grenzschicht der Strömung 12, was zur Vermeidung von Strömungsabrissen dient.

Der Befestigungsabschnitt 2 ist hier als Teil eines Stufenblechs ausgebildet, an welchem sich ferner eine als Ausrichtungsabschnitt 6 vorgesehene Stufe befindet. Die aerodynamisch aktiven Abschnitte 3 sind dabei in der in Bezug auf Fig. 21 beschriebenen Weise ausgebildet und an einer hinteren Kante des Stufenblechs stoffschlüssig befestigt.

Bei der dargestellten Ausführungsform sind rein schematisch lediglich 2 aerodynamisch aktive Abschnitte 2 dargestellt. Selbstverständlich lässt sich eine derartige Reihe aerodynamisch aktiver Abschnitte sowie das Stufenblech mit Befestigungs- und Ausrichtungsabschnitt aber beliebig breit fortführen, insbesondere mit einer Vielzahl derartig aerodynamisch aktiver Abschnitte 3. Somit lassen sich diese als ein zusammenhängendes Verwirbelungselement 1 schnell und einfach an ein aerodynamisches Profil 10 anbringen bzw. in der Fertigung montieren oder nachträglich nachrüsten.

Dargestellt sind hier beispielhaft voneinander beabstandete gleichsinnig verdrehte Leitbleche 4 der aerodynamisch aktiven Abschnitte 3. Bei weiteren Ausführungsformen lassen sich jedoch, insbesondere bei einer engeren Anordnung der aerodynamisch aktiven Abschnitte, auch gegensinnig verdrehten Leitblech benachbarter aerodynamisch aktiver Abschnitte 3A, 3B in gleicher Weise einsetzen.

Fig. 35 zeigt eine schematische Seitenansicht eines aerodynamischen Profils 10 gemäß einer noch weiteren Ausführungsform.

Diese Ausführungsform unterscheidet sich von Fig. 34 durch einen individuellen Befestigungsabschnitt 2 und Ausrichtungsabschnitt 6 jedes aerodynamisch aktiven Abschnitts 3. Dies erlaubt eine hohe Flexibilität bei der Anbringung und Ausrichtung. Selbstverständlich sind auch hier unterschiedliche, das heißt gleichsinnige und gegensinnige Drehrichtungen möglich.

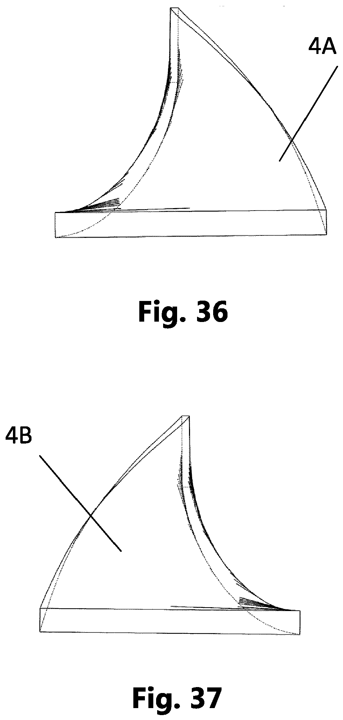

Fig. 36 zeigt eine Vorderansicht eines verdrehten Leitblechs 4A.

Das Leitblech 4A ist in seinem Verlauf in die Zeichnungsebene hinein um eine viertel Umdrehung entgegen dem Uhrzeigersinn verdreht ausgebildet.

Fig. 37 zeigt eine Vorderansicht eines gegensinnig verdrehten Leitblechs 4B.

Das Leitblech 4B ist in seinem Verlauf in die Zeichnungsebene hinein um eine viertel Umdrehung im Uhrzeigersinn verdreht ausgebildet.

Fig. 38 zeigt eine schematische Darstellung nebeneinander angeordneter gegensinnig verdrehter Leitbleche 4A, 4B.

Die Verdrehung der Leitbleche 4A, 4B führt zu einer Verwirbelung von über die Leitbleche 4A, 4B strömender Luft. Dabei entstehende Wirbel 15A, 15B weisen entsprechend der Gegenseitigkeit der Verdrehung der Leitbleche 4A, 4B einen gegensinnigen Drall auf. In einem Einflussbereich der Wirbel 15A, 15B, der sich hier in der Mitte der schematischen Darstellung zwischen den Leitblechen 4A, 4B befindet, weisen die Wirbel 15A, 15B jedoch gleichgerichtete Umfangsgeschwindigkeitsvektoren 27 auf, sodass sich die Wirbel 15A, 15B hier nicht gegenseitig bremsen sondern in dem Einflussbereich zueinander im Wesentlichen gleichläufig sind. Auf diese Weise wird deutlich weniger aerodynamische Widerstand erzeugt als bei gleichsinnigen Wirbeln, die in einem Einflussbereich gegensinnig wären.

Bei einer Ausführungsform kann eine Vielzahl von derartigen Verwirbelungselementen 1 oder ein eine Vielzahl von derartigen aerodynamisch aktiven Bereichen 3 aufweisendes Verwirbelungselement 1 vorgesehen sein. Benachbarte aerodynamisch aktive Bereiche 3A, 3B sind dabei jeweils abwechselnd in unterschiedliche Drehrichtungen verdreht zur Erzeugung gegensinniger Wirbel 15A, 15B ausgebildet, so dass jeweils in gegenseitigen Einflussbereichen benachbarter Wirbel 15A, 15B deren Geschwindigkeitsvektoren 27 in Umfangsrichtung gleichläufig sind.

Fig. 39 zeigt eine schematische Darstellung der Strömungsverhältnisse an einem aerodynamischen Profil 10.

Die über die Profiloberfläche 11 verlaufenden Strömung 12 löst sich im Bereich der Endkante 13 ab, wobei die Strömungen der Druckseite und der Unterdruckseite des Profils hinter der Profilendkante 13 zusammentreffen und ein Endkantenwirbel 14 entsteht. Dieser Endkantenwirbel ist bei großen Anstellwinkeln z.B. durch Windböen, größer als bei kleineren Anstellwinkeln.

Im Bereich der Profilendkante 13 ist ein Verwirbelungselement 1 mit gegensinnig verdrehten aerodynamisch aktiven Abschnitten 3A, 3B vorgesehen. Diese erzeugen den Endkantenwirbel reduzierende gegensinnige Wirbel 15.

Mit der Reduktion des Endkantenwirbels 14 werden der aerodynamische Widerstand und die Lärmemission des aerodynamischen Profils 10 verringert.

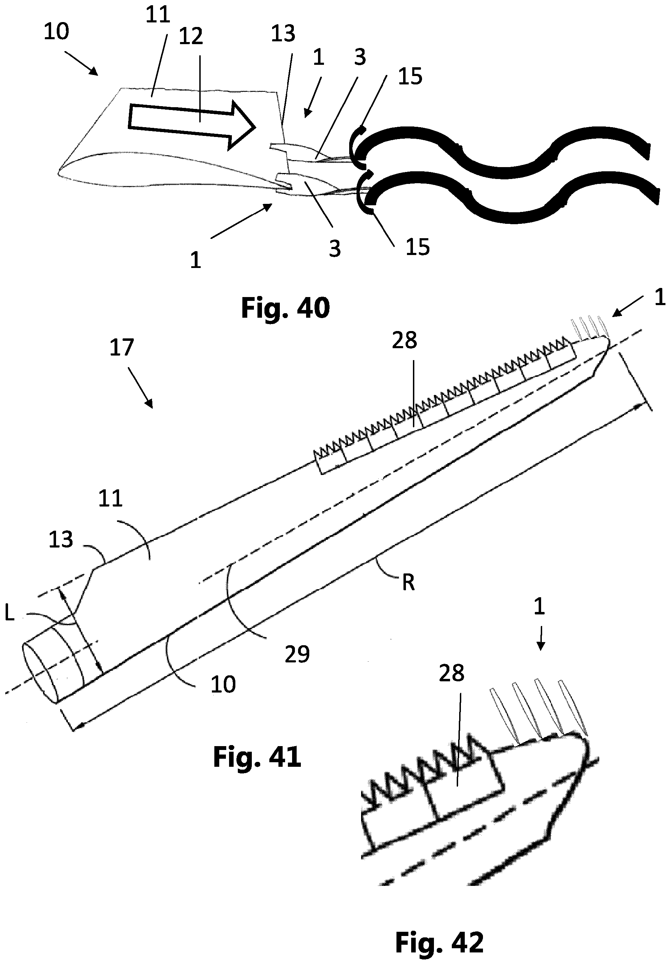

Fig. 40 zeigt eine schematische Darstellung der Strömungsverhältnisse an einem aerodynamischen Profil 10 gemäß einer weiteren Ausführungsform.

Das aerodynamische Profil 10 ist hier wie in Bezug auf Fig. 22 näher erläutert ausgebildet und weist Verwirbelungselemente 1 mit gleichsinnig verdrehten aerodynamisch aktiven Abschnitten 3 auf, welche jedoch voneinander beabstandet sind.

Ein Endkantenwirbel 14 ist ebenfalls vorhanden, jedoch zur besseren Übersichtlichkeit nicht eingezeichnet. Im Bereich der Profilendkante 13 werden mit den gleichsinnig verdrehten aerodynamisch aktiven Abschnitten 3 der Verwirbelungselemente 1 den Endkantenwirbel 14 reduzierende Wirbel 15 erzeugt.

Durch die Beabstandung der aerodynamisch aktiven Abschnitte 3 sind Einflussbereiche der Wirbel 15 nur minimal bzw. vernachlässigbar.

Auch hier werden mit der durch die aerodynamisch aktiven Abschnitte 3 erreichten Reduktion des Endkantenwirbels 14 der aerodynamische Widerstand und die Lärmemission des aerodynamischen Profils 10 verringert.

Fig. 41 zeigt eine Draufsicht auf ein Rotorblatt 17 gemäß einer Ausführungsform.

Fig. 42 zeigt eine Detailansicht des Randes des Rotorblatts 17 gemäß Fig. 41.

Es handelt sich bei dem Rotorblatt beispielhaft um ein Rotorblatt einer Windenergieanlage. Dieses weist an der radial äußeren Hälfte herkömmliche gezackte Strukturen 28, sogenannte Serrations, an der hinteren Profilendkante auf. An einem radial äußeren Rand des Rotorblatts sind zusätzlich erfindungsgemäße Verwirbelungselemente 1 vorgesehen. Es handelt sich somit um eine kombinierte Anordnung von herkömmlichen Serrations und erfindungsgemäßen Verwirbelungselementen 1.

Anstatt herkömmlicher Serrations können bei weiteren Ausführungsformen auch erfindungsgemäße flächig mit dem Befestigungsabschnitt 2 an der Profiloberfläche 11 im Bereich der Profilendkante befestigbare Verwirbelungselemente 1, beispielsweise gemäß einer der Ausführungsformen nach Fig. 3, 4, 12, 15, 28, 29 oder 30, vorgesehen sein.

Darüber hinaus können alternativ oder zusätzlich erfindungsgemäße Verwirbelungselemente 1 auch in mittigen Bereichen der Profiloberfläche, beispielsweise im Bereich der Drehachse 29, insbesondere in der in Bezug auf Fig. 34 und 35 beschriebenen Weise, zur Erzeugung turbulenter Grenzströmungen auf der Profiloberfläche 11 vorgesehen sein.

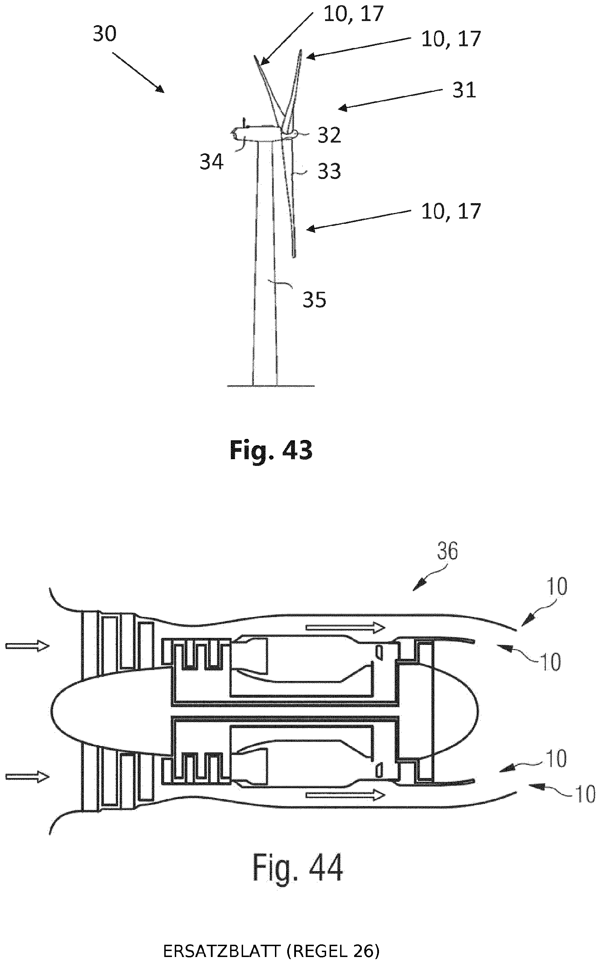

Fig. 43 zeigt eine schematische Darstellung einer Windkraftanlage 30 mit einem Rotor 31, der Rotorblätter mit einem aerodynamischen Profil 10 aufweist.

Die Rotorblätter 17 sind an einer Nabe 32 montiert, welche in einer Gondel 34 gelagert ist. Die Gondel 34 ist auf einem Turm 35 angeordnet und enthält eine Blattverstellung, ein Getriebe, eine Bremse sowie einen Generator. Der Turm 35 ist zur Windrichtungsnachführung ausgelegt und entsprechend um die Turmachse verdrehbar ausgebildet.

Besagte aerodynamische Profile 10 sind insbesondere in der äußeren radialen Hälfte der Rotorblätter vorgesehen, da hier die höchsten absoluten Geschwindigkeiten erreicht werden und somit der meiste Lärm und die meisten Reibungswiderstände entstehen. Darüber hinaus sind diese Bereiche und insbesondere auch der Innenbereich des Rotorblattes auch anfällig für Strömungsabrisse. All diesen Problemen kann mit erfindungsgemäßen Verwirbelungselementen 1 entgegnet werden.

Fig. 44 zeigt eine schematische Darstellung eines nicht beanspruchten Turbinengehäuses 36, welches ein aerodynamisches Profil 10 aufweist.

In dem Turbinengehäuse 36 ist eine hier nicht näher beschriebene Turbine angeordnet, wie sie dem Fachmann an sich bekannt sind. Gemeinsam bilden das Turbinengehäuse und die Turbine ein Triebwerk für ein Luft- oder Raumfahrzeug, für welche ebenfalls strenge Lärmvorschriften gelten.

Die Turbine beschleunigt einen hier schematisch mit Pfeilen eingezeichneten Fluidstrom. Das Turbinengehäuse 36 weist an seiner Austrittsseite ein aerodynamisches Profil 10 auf, welches den austretenden Fluidstrom möglichst geräuscharm und mit geringem Widerstand austreten lässt. Erfindungsgemäße Verwirbelungselemente bewirken, insbesondere im Bereich der Endkanten des aerodynamischen Profils 10 des Turbinengehäuses, eine Reibungs- und/oder Lärmreduktion.

Bei weiteren Ausführungsformen sind weitere Anwendungsbereiche erfindungsgemäßer Verwirbelungselemente, insbesondere bei weiteren rotierenden Profilen, denkbar. Beispielsweise können diese auch bei Propellern oder anderen, insbesondere rotierenden, Gegenständen mit Fluidströmungen eingesetzt werden.

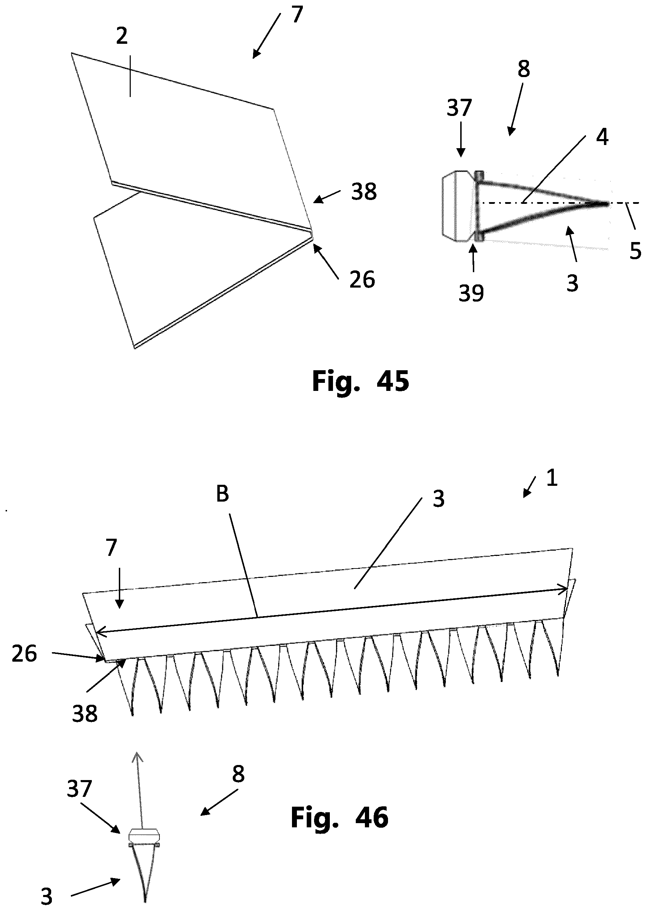

Fig. 45 zeigt eine schematische Darstellung separater Befestigungs- und aerodynamisch aktiver Abschnitte.

Der Befestigungsabschnitt 2 und der aerodynamisch aktive Abschnitt 3 sind hier mit zwei unterschiedlichen Teilen 7, 8 gebildet. Die beiden Teile 7, 8 lassen sich formschlüssig miteinander koppeln. Dazu ist hier beispielhaft ein Rastfortsatz 37 an dem aerodynamisch aktiven Abschnitt 3 vorgesehen, der in eine Rastausnehmung 38 des Befestigungsabschnitts einführbar und so damit formschlüssig verbindbar ist.

Der Rastfortsatz 37 weist eine Ausnehmung 39 auf, die mit Rastelementen der Rastausnehmung 38 in Eingriff bringbar ist.

Bei dem Befestigungsabschnitt 2 handelt es sich hier beispielhaft um einen V-förmigen Befestigungsabschnitt, wobei die Rastausnehmung 38 im Stoßbereich der V-Form vorgesehen ist. Auf diese Weise kann im Stoßbereich 26 an der Innenseite ein Hohlraum bereitgestellt werden, in welchem der Rastfortsatz 37 aufgenommen werden kann.

Fig. 46 zeigt eine schematische Darstellung eines Verwirbelungselements 1 mit den Teilen 7, 8 gemäß Fig. 45.

Der den ersten Teil 7 darstellende Befestigungsabschnitt 2 ist hier mit einer vorbestimmten Breite B gebildet, entlang welcher eine Vielzahl von nebeneinander angeordneten Rastausnehmungen 38 im Stoßbereich 26 angeordnet sind. In die Rastausnehmungen 38 sind entsprechend die den zweiten Teil 8 darstellenden aerodynamisch aktiven Abschnitte 3 mit ihren Rastfortsätzen 37 gemäß der eingezeichneten Pfeilrichtung eingeführt und darin verrastet. Somit ist eine formschlüssige Verbindung der Teile 7, 8 bereitgestellt.

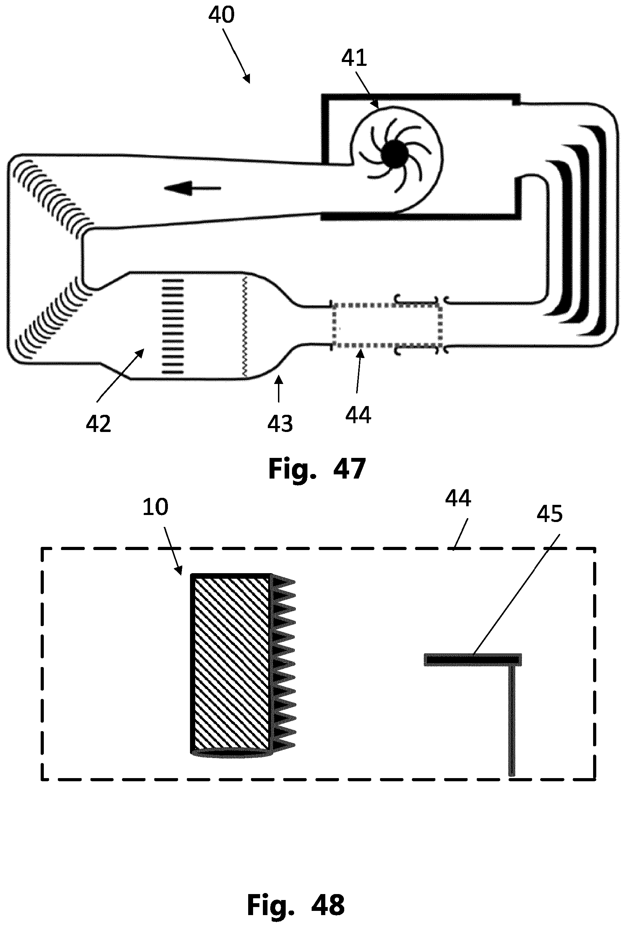

Fig. 47 zeigt einen schematisch dargestellten Aufbau eines Windkanals 40.

Der Windkanal weist ein Gebläse 41, einen Gleichrichter 42, eine Düse 43 und ein im Anschluss an die Düse 43 anschließendes Messvolumen 44 auf.

Fig. 48 zeigt eine Seitenansicht des Messaufbaus einer Lärmmessung im Messvolumen 44 des Windkanals 40.

Das Messvolumen 44 weist einen mit Plexiglas begrenzten Messbereich auf, der hier gestrichelt gekennzeichnet ist. Der Messbereich weist beispielhaft eine Querschnittsfläche von ca. 1000 mm x 800 mm auf.

In dem Messvolumen 44 sind ein aerodynamisches Profil 10 und ein in Strömungsrichtung nachfolgend angeordneter Lärmsensor 45 angeordnet.

Mit einer derartigen Versuchsanordnung wurde eine Versuchsreihe zur Lärmreduzierung mittels Verwirbelungselementen 1 durchgeführt. Dazu wurden Schallmessungen mit vier unterschiedlichen Konfigurationen eines aerodynamischen Profils 10 sowie eine Messung im leeren Kanal durchgeführt. Das zu untersuchende aerodynamische Profil 10 wurde hochkant in dem Messkanal mit einem leichten Anstellwinkel von 4 Grad angeordnet.

Es waren folgende Konfigurationen eines Rotorblattes (Modifikation der Hinterkante des Rotorblattes) schalltechnisch zu untersuchen:

a) Rotorblatt ohne Serrations (NACA Profil mit Tripping Band (Trip))
b) Rotorblatt nach a) mit Standard-Serrations (gezackte Struktur mit Trip)
c) Rotorblatt nach a) mit modifizierten Serrations (Verwirbelungselemente 1 mit Breite/Länge Verhältnis von b/l = 10% und gegensinniger 45 Grad Verdrehung sowie mit Trip)
d) Rotorblatt mit modifizierten Serrations (Verwirbelungselemente 1 mit Breite/Länge Verhältnis von b/l = 20% und gleichsinniger 90 Grad Verdrehung und Beabstandung sowie mit Trip)
e) Vergleichsmessung im leeren Kanal

Zur messtechnischen Ermittlung der durch das jeweilige Rotorblatt in der Strömung hervorgerufenen Geräuschbeiträge wurden Schallmessungen in der Strömung unter Verwendung einer Schlitzrohrsonde als Lärmsensor 45 durchgeführt.

In der freien Strömung sind in der Regel Turbulenzen und damit verbundene Schwankungen des Drucks und der Strömungsgeschwindigkeit vorhanden. Diese werden neben den durch Schallwellen hervorgerufenen Druckschwankungen ebenfalls vom Mikrofon (Schlitzrohrsonde) erfasst. Durch die Verwendung der Schlitzrohrsonde wird der Einfluss der in der freien Strömung vorhandenen Turbulenzen am Mikrofon vermindert und dadurch eine Verfälschung der Schallmessungen in Strömungen minimiert.

Das Mikrofon in der Schlitzrohrsonde wurde mittig im Kanal in einem Abstand von ca. 50 cm hinter dem eingespannten Rotorblatt in einer Höhe von ca. 25 cm angeordnet. Die Schlitzrohrsonde wurde dabei in Richtung des Rotorblattes und somit in Strömungsrichtung ausgerichtet.

Die Schallmessungen fanden bei Strömungsgeschwindigkeit im Kanal von 50 m/s statt.

Die verwendeten Messgeräte sind in der folgenden Tabelle aufgelistet.

| Bezeichnung | Typ | Hersteller | Seriennr. |
|---|---|---|---|
| Mehrkanalmessgerät | **MKII** | | |
|     Controller | PO 12 G2 | Mecaic | 1015M2292 |
|     Inputkarte | SC42 | Mecaic | 0307M6825 |
|     Inputmodul | ICP422 | Mecalc | 0206M1597 |
| | ICP422 | | 0306M1758 |
| | ICP422 | | 1007M9719 |
| | ICP422 | | 1206M5503 |
| Mikrofon | 377 802 | PCB | LW135429 |
| Vorverstärker | 426E01 | PCB | LW024755 |
| Schlitzrohrsonde | | Müller-BBM | |
| Luftschall-Kalibrator | 4230 | Brüel & Kjaer | 1440751 |
| Rechner: Lifebook | E746 14" | Fujitsu | DSER006774 |
| Messwerterfassungs- und Auswertesoftware | PAK | Müller-BBM VAS | Version 5.9 SR 3b |

Die Kalibrierung der Messgeräte wurde vor und nach den Messungen mit Hilfe eines Kalibrators überprüft. Abweichungen wurden nicht festgestellt. Im Rahmen eines Qualitätssicherungssystems werden die Geräte zusätzlich in regelmäßigen Abständen überwacht und kontrolliert.

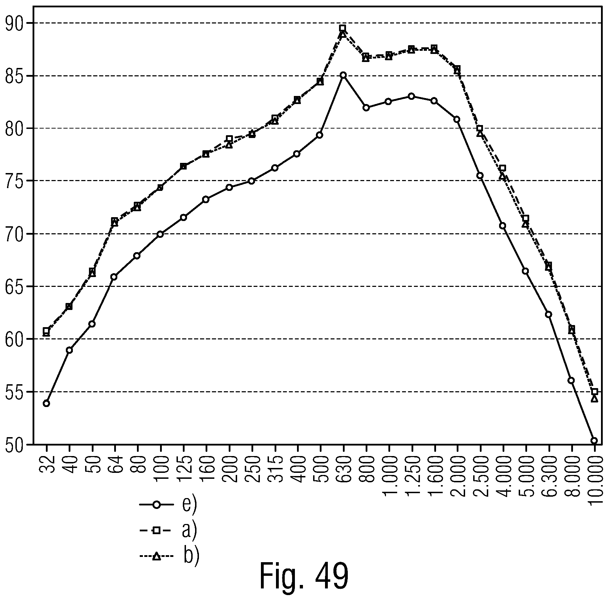

Fig. 49 zeigt ein Diagramm eines Messergebnisses mit dem Messaufbau nach Fig. 48.

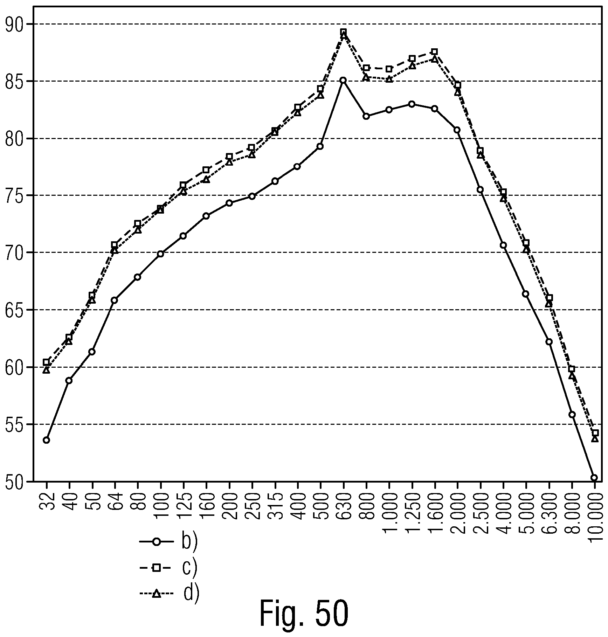

Fig. 50 zeigt ein weiteres Diagramm eines Messergebnisses mit dem Messaufbau nach Fig. 48;

Es sind jeweils drei Messungen an Konfigurationen der Rotorblätter als A-bewerteter Schalldruckpegel in dB(A) re 20 μPa in Terzbandbreite je Grafik dargestellt.

Der in allen Messergebnissen vorhandene erhöhte Schalldruckpegel in dem Terz-Frequenzband mit der Mittenfrequenz von 630 Hz ist auf eine akustische Beeinflussung durch die Messanordnung zurückzuführen.

In Fig. 49 ist ein Vergleich der Messergebnisse in den Konfigurationen a), b) und e) bei einer Strömungsgeschwindigkeit von 50 m/s dargestellt. Die Darstellung ist in Terzbandbreite von 31,5 Hz bis 1O kHz an der X-Achse und an der Y-Achse der Schalldruckpegel von 50 bis 90 dB aufgetragen.

Es zeigt sich aus dem Vergleich der Messergebnisse, dass sich bei der Messung e) im leeren Kanal die geringsten Schalldruckpegel am Mikrofon ergeben, in nahezu allen Frequenzbändern. Die gemessenen Schalldruckpegel der Konfigurationen a) ohne Serrations (NACA Profil) sowie b) der Standard-Serrations liegen ca. 4 dB(A) oberhalb der Messergebnisse e) im leeren Kanal.

Fig. 50 zeigt einen Vergleich der Messergebnisse in den Konfigurationen c) des Rotorblatts mit Verwirbelungselementen (45 Grad gegensinnig verdreht, b/l = 10 %) und d) des Rotorblatt mit Verwirbelungselementen (90 Grad gleichsinnig verdreht, b/l = 20 % mit Beabstandung/Lücke in der Verzahnung) sowie der Messung e) im leeren Kanal. Es handelt sich um eine Darstellung in Terzbandbreite von 31,5 Hz bis 10 kHz.

Zusammenfasssung der Ergebnisse der Lärmmessung:

| | | Summen-Schalldruckpegel in dB (A) |
|---|---|---|
| a) | Rotorblatt ohne Serrations | 97,0 |
| b) | Rotorblatt mit Standard-Serrations | 96,9 |

(fortgesetzt)

| | | | Summen-Schalldruckpegel in dB (A) |
|---|---|---|---|
| c) | Rotorblatt mit Verwirbelungselementen | (10%, 45°) | 96,5 |
| d) | Rotorblatt mit Verwirbelungselementen | (20%, 90°) | 96,2 |
| e) | Vergleichsmessung im leeren Windkanal | | 92,8 |

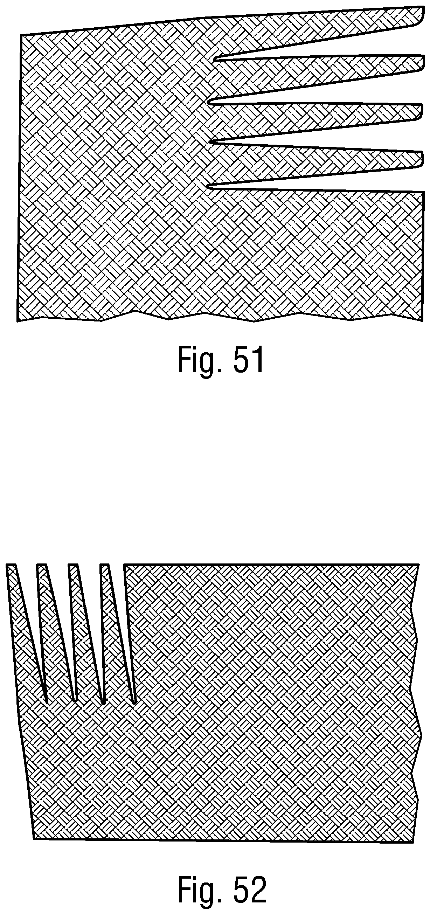

Fig. 51 zeigt eine Draufsicht auf ein Standardserration trapezförmig.

Fig. 52 zeigt eine gedrehte Draufsicht auf ein Standardserration trapezförmig.

Bei hohen Geschwindigkeiten und/oder statischem und dynamischen Stall entsteht vermehrt Lärm / Geräusch und Widerstand und Belastungen an den Profilen von Flügeln von Luftfahrzeugen mit Fluid-Strömungen, insb. von Rotorblättern von Windenergieanlagen. Hierbei führen Einflüsse wie Windböen und der YAW-Effekt zu dynamischen Belastungen und Schwingungen, welche die Großanlagen an ihre Belastungsgrenze bringen. Zur Verminderung von Lärm / Geräusch und Widerstand werden bisher solche Standardserrations eingesetzt.

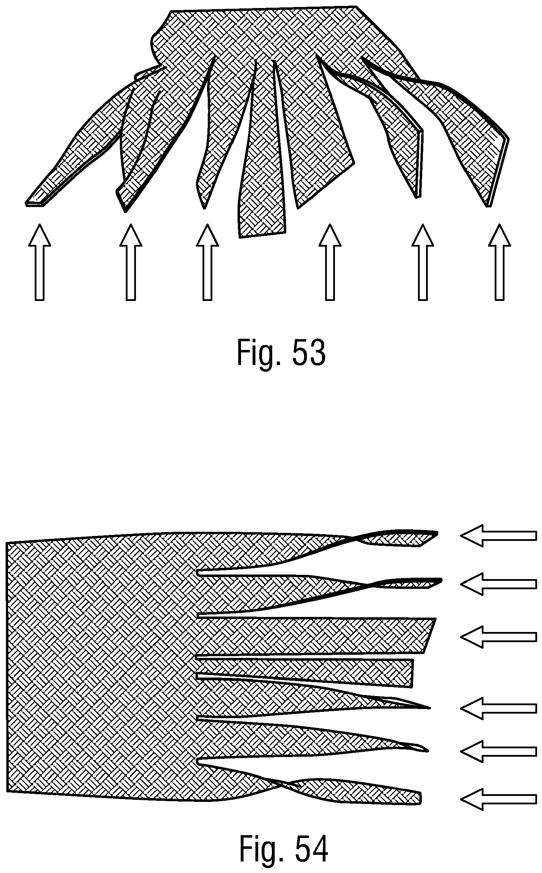

Fig. 53 zeigt eine perspektivische Ansicht von vorne-oben auf ein Serration trapezförmig und verdreht von 45 bis 180 Grad.

Fig. 54 zeigt eine Draufsicht auf ein Serration trapezförmig und verdreht von 45 bis 180 Grad;

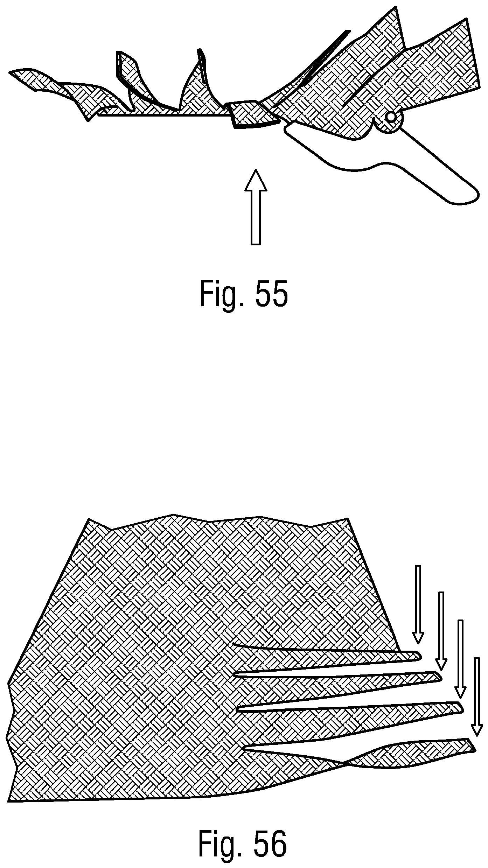

Fig. 55 zeigt eine Vordersicht eines Serration trapezförmig und verdreht von 45 bis 180 Grad;

Fig. 56 zeigt eine perspektivische Ansicht eines Serrations;

Aufbau der Serrations und / oder Turbulatoren:

Diese neue Serration-Technologie basiert darauf, dass diese eine Dreiecks-förmige oder Trapez-förmige oder Rechteckförmige oder Kurven-förmige Verzahnung nach dem St.d. T. aufweist (Fig. 1 - 2), welche helixförmig (um z.B. 10°, 20°, bevorzugt 45°, besonders bevorzugt 90°, ganz besonders bevorzugt 180° bis ca. 360°) verdreht wird (Fig. 53 - 54).

Des weiteren kann das Serration / Turbulator auch und/oder zusätzlich gewölbt und/oder einfach oder mehrfach abgeknickt sein (Siehe Fig. 55 und 56).

Die im Windkanal getesteten trapezförmigen Serrations haben eine 4-fache Länge zu ihrer Breite und sind trapez-förmig bzw. dreiecks-förmig.

Die Serrations und / oder Turbulatoren bestehen aus einer Basisfläche (Basiselement) zur Befestigung und einer oder mehrerer helixförmig verdrehter Elemente und einem Übergangsbereich, welche diese beiden Elemente verbindet, welcher kurvenförmig und /oder knickförmig sein kann.

Das einzelne Serration und / oder Turbulator kann vorteilhaft als einzelnes Bauteil aus einem Stück Material bestehen oder kann auch aus mehreren Elementen zusammengefügt werden, z.B. durch Kleben, Schrauben, Nieten.

Auch kann die Helixform innerhalb einer Verzahnung unterschiedliche Steigungen vorsehen um z.B. den Drall der Strömung und damit die Wirkungen zu verstärken.

Auch kann dieses Verwirbelungselement als Ersatz für Vortex-Generatoren dienen, welche einzeln oder mit mehreren Elementen auf einer Grundplatte befestigt sind. Auch können diese im Bereich von bestehenden Serrations beliebiger Hersteller angebracht werden.

Das erfindungsgemäße Verwirbelungselement/Serration kann auch an der Profil-Endkante in einem Winkel von 0 bis 90 Grad beginnen und sich dann helixförmig hinter der Endkante fortsetzen. Hierbei kann dieses beispielsweise auch aus mehreren Teilen hergestellt sein, z. B. durch Schweißen, Löten, Stecken, u.a.

Auch können diese Serrations in dieser Anordnung auf die Profil-Endkante aufgesteckt (Auf Ober- und Unterseite) werden und dabei auch eine kleine Basisfläche ausbilden welche zu deren Befestigung dient.

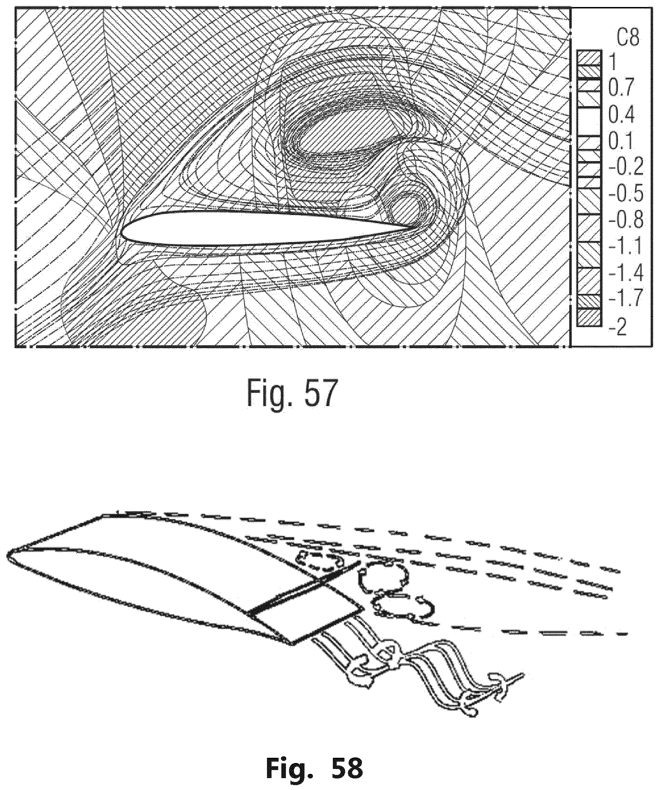

Fig. 57 zeigt eine numerische Dynamic Stall Simulation mit dem DLR-TAU Code.

Fig. 58 zeigt eine schematische Darstellung gegensinniger Wirbel an der Endkante eines Rotorblattes aufgrund gegensinniger Serrations.

Fig. 58 zeigt die Gleichsinnige (in gegensinniger benachbarter Drehrichtung) Wirbel an der Endkante.

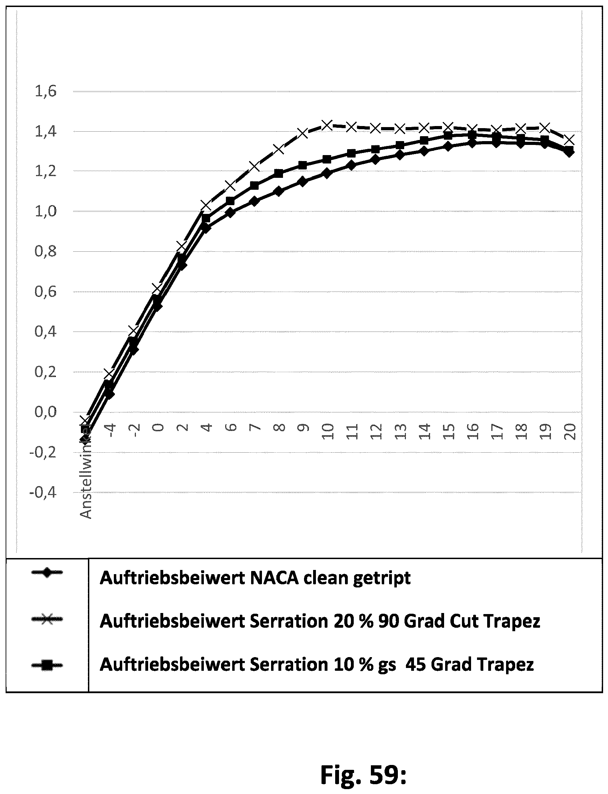

Fig. 59 zeigt ein Auftriebsbeiwertdiagramm von Trapezförmige 10 %-ige (b/h=10%) unten angebrachten Serrations und max. (20 %) oben angebrachten Serrations.

Es zeigt sich, dass die oben angebrachten (Saugseite) 20%-igen Serrations eine bedeutend höheren Auftrieb erzeugen als das Normalprofil (getript). Die unten angebrachten (Druckseite) 10 %-igen Serrations erzeugen einen geringfügig geringeren Auftrieb

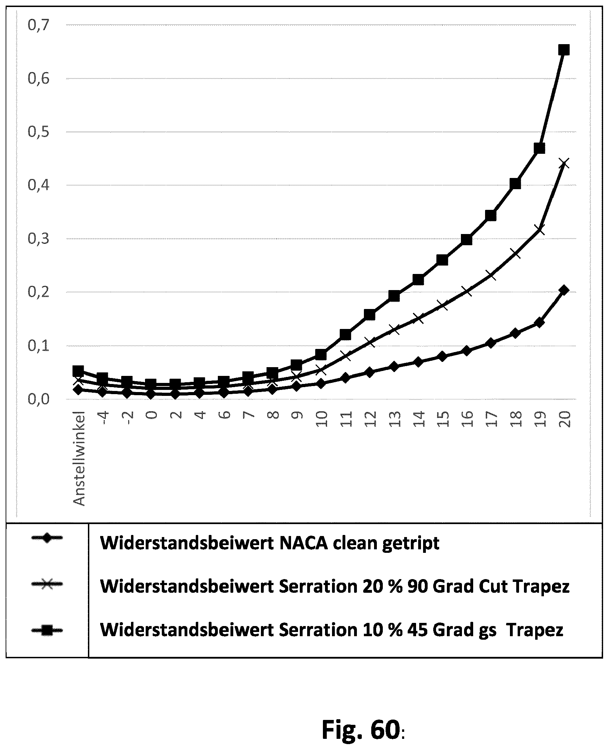

Fig. 60 zeigt ein Widerstandsbeiwertdiagramm eines NACA 64-618 Profils von trapezförmigen 10 %-igen unten angebrachten Serrations und max. (20 %-igen) oben angebrachten Serrations

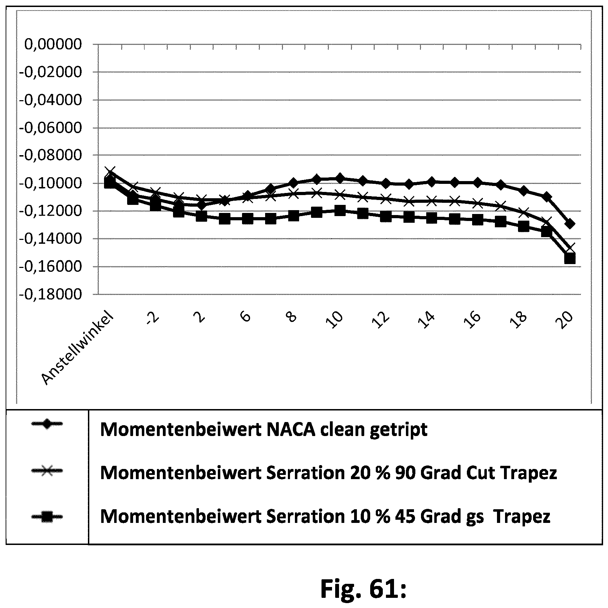

Fig. 61 zeigt Drehmomentbeiwertdiagramm eines NACA 64-618 Profils von trapezförmigen 10 %-ige (b/h=10%) unten angebrachten Serrations und max. (20 %) oben angebrachten Serrations.

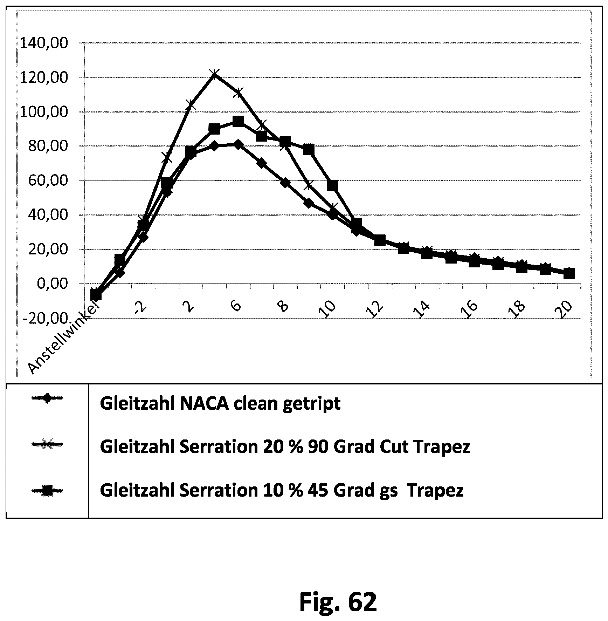

Fig. 62 zeigt ein Gleitzahldiagramm eines NACA 64-618 Profils von trapezförmigen 10 %-igen (b/h=10%) unten angebrachten Serrations und max. (20 %) oben angebrachten Serrations.

Es entsteht eine deutliche Auftriebssteigerung über den gesamten Anstellwinkelbereich, insb. bei gleichsinnigen Wirbeln (links- und rechtsdrehende Wirbel direkt nebeneinander erzeugen überraschender Weise weniger Widerstand als gegensinnige Wirbel).

Versuchsaufbau und Auswertemethodik:
Die vorbereiteten Profile werden im Windkanal vermessen. Der Windkanal hat eine geschlossene Messstrecke mit einem Querschnitt von $h \times b = 0.8 \times 1$m. Es können Strömungsgeschwindigkeiten bis 50m/s bei einer Turbulenzintensität von $T\_i = \sigma\_u/u^- \leq 0.3\%$ erreicht werden. Die Strömungsgeschwindigkeit wird im Windkanal über den dynamischen Druck $p\_d = \rho u^2 = p\_gesamt - p\_s$ bestimmt, wobei $p\_gesamt$ den Gesamtdruck, und $p\_s$ den statischen Druck und $\rho$ die Luftdichte bezeichnet. Beide Drücke werden an je acht Stellen in Vorkammer und Düse des Windkanals gemittelt, und der dynamische Druck mit einer Differenzdruckdose gemessen. Die Strömungsgeschwindigkeit ergibt sich folglich gemäß

$$u = \sqrt{(2p\_d/\rho)},$$

mit der Luftdichte $\rho$. Diese wird bestimmt unter der Berücksichtigung des stromabwärts der Messstrecke gemessenen Umgebungsluftdrucks, der Temperatur, sowie der relativen Luftfeuchtigkeit, um Einflüsse durch Witterung oder Temperaturveränderungen auf die Messergebnisse zu kompensieren.

Zur aerodynamischen Vermessung der Flügelprofile, werden diese vertikal in der geschlossenen Messstrecke an zwei Achsen befestigt.

In der Boden- und Deckplatte sind Drehteller eingelassen, welche mit den Profilenden abschließen und von den Windkanalwänden mechanisch entkoppelt sind. Das Profil kann so um seine Pitch-Achse gedreht werden. In den Achsen sind außerhalb der Messstrecke Mehrkomponenten-Kraftmessdosen integriert, die die Messung auftretender Kräfte in drei Raumrichtungen, sowie dem Pitchmoment erlauben. Zusätzlich wird der jeweilig eingestellte Pitchwinkel mit einem Drehgeber erfasst.

Die Dimensionslosen Auftriebs-, Widerstands- und Momentenbeiwerte $C\_L$, $C\_D$ und $C\_M$ der zu vermessenen Flügelprofile berechnen sich aus den gemessenen Auftriebs- und Widerstandskräften $F\_L$ und $F\_D$ sowie des Pitchmomentes $M$ gemäß

$$C\_L = (2F\_L)/(\rho \cdot c \cdot S \cdot u^2),$$

$$C\_D = (2F\_D)/(\rho \cdot c \cdot S \cdot u^2)$$

und

$$C\_M = 2M/(\rho \cdot c^2 \cdot S \cdot u^2)$$

mit der Luftdichte $\rho$, der Sehnenlänge $c$, der Profillänge $S$ und der mittleren Strömungsgeschwindigkeit $u$.

Bei der aerodynamischen Vermessung von Flügelprofilen werden üblicherweise Windkanalkorrekturen angewandt, auf die bei dieser Auswertung verzichtet wird. Für mit Strömungsbeeinflussenden Elementen ausgestattete Profile existiert nach aktuellem Kenntnisstand keine etablierte Methode.

Die zu testenden Serrations werden an ihrem Basiselement mit wieder lösbarem doppelseitigem Klebeband am Rotorblatt-Element befestigt.

Die Rotorblattelemente werden mit einem 0,1 mm dicken Tripingband versehen um eine leicht turbulente Strömung zu simulieren (Bei allen Messungen verwendet).

In den Diagrammen werden die folgenden Diagrammwerte in der Y-Achse dargestellt, in der X-Achse ist der Pitchwinkel = Anstellwinkel dargestellt:

Auftriebsbeiwert $C\_L$
Widerstandsbeiwert $C\_D$
Momentenbeiwert $C\_M$
Gleitzahl = $C\_L/C\_D$

Es werden die beiden Profile NACA 64618 und DU-W250 (Außenprofile eines Rotorblattes) im Windkanal mit verschiedenen Variationen an Serrations getestet.

Folgende Abkürzungen werden verwendet:

NACA clean trip= NACA 64618-Profil ohne Serration mit Tripingband

Trapez = Trapezförmige Serrations 45 bzw. 90 Grad = Verdrehungswinkel pro Serrationlänge 10 % bzw. 20 % = Serrationlänge in % der Profillänge Cut = Es ist zwischen jedem Serrationzahn eine Lücke von der Breite eines Serrationzahns (ausgeschnittene Serrationzähne) Gs = Benachbarte Serrationzähne sind gegensinnig verdreht

Ergebnisse:

Fig. 59- 62

Die Gleitzahl der Serration 20 % 90 Grad Cut Trapez ist deutlich höher als das NACA 64618 -Profil getript ohne Serration. Dies zeigt eine sehr deutliche Leistungssteigerung.

Die Gleitzahl der Serration 10 % 45 Grad gs Trapez ist etwas weniger höher als das NACA 64618 -Profil getript ohne Serration. Dies zeigt eine deutliche Leistungssteigerung.

Fig. 63 - 66

Die Gleitzahl der Serration 10 % 45 Grad gs Trapez unten angebracht ist deutlich höher als das NACA 64618 -Profil getript ohne Serration. Dies zeigt eine sehr deutliche Leistungssteigerung.

Die Gleitzahl der Serration 20 % 90 Grad gs Trapez oben angebracht ist höher als das NACA 64618 -Profil getript ohne Serration. Dies zeigt eine deutliche Leistungssteigerung Außerdem zeigt sich auch ein breiterer Bereich der Gleitzahlsteigerung zu höheren Anstellwinkeln hin.

Wirkung:

Die Rückstromklappen und / oder Serrations und/oder Turbulatoren erhöhen den Auftrieb des Rotorblattes und dadurch auch den Ertrag einer Windenergieanlage im Bereich von 1- 10 %, bevorzugt 2- 8 %, besonders bevorzugt 3- 5 %.

Stall-gesteuerte Windenergieanlagen haben hierbei größere Effekte als pitch-gesteuerte Windenergieanlagen.

Die Lärmreduzierung erfolgt durch die Erzeugung gezielter vieler kleinerer Rotationswirbel (im Vergleich zum Endkanten-Wirbel des Rotorblattes= hinterster Wirbel in Fig. 58) in Richtung der anliegenden Strömung. Diese vielen kleinen Wirbel können gleichsinnig oder gegensinnig von der Drehrichtung her erzeugt (Fig. 58) werden.

Diese vielen kleinen Wirbel erzeugen einen kleineren Endkanten-Wirbel-Bereich und damit weniger Widerstand und mehr Auftrieb und weniger Lärm / Geräusch durch die verwirbelte Strömung.

Die Größe der Wirbelerzeuger liegt im wenige mm- und mehreren cm -Bereich.

Auch können diese Wirbelerzeuger gezielt am Ende einer größeren Serration angebracht/ angeordnet sein.

Auch können diese Nachträglich an das Rotorblatt oder bestehende Serrations angebracht werden.

Hierbei wird eine Geräuschreduktion von in einer Höhe von > 2 dB(A), besonders > 3 dB(A) und besonders bevorzugt > 5 dB(A) erzielt.

Des Weiteren wird durch die Rückstromklappen und / oder die Serrations und / oder die Turbulatoren eine Lastreduzierung der Windenergieanlage erzielt. Dies in einer Höhe von > 5%, besonders > 10 % und besonders bevorzugt > 15 % Lastreduzierung erzielt.

Herstellung:

Die Materialien für die Rückstromklappen und/oder Serration- und/oder Turbulatoren- Technologie bestehen bevorzugt aus Thermoplastischen Faser-Verstärktem-Kunststoff wie z.B. PC oder PMMA mit einer hohen Umwelt- / UV-Beständigkeit und Lebensdauer (inkl. entsprechender Additive für UV und Witterungsschutz).

Die Herstellung kann mittels Thermo-Press-Formen und/ oder mittels Verdrehen der Verzahnung (z.B. erwärmtes Thermoplast-FVK) durch Drehbewegungs-Aktoren wie z.B. Drehmagnete, Schrittmotoren erfolgen.

Dies kann auch gleichzeitig mit vielen einzelnen Zähnen der Verzahnung gleichzeitig oder nacheinander erfolgen. Damit sind kurze Fertigungszeiten möglich.

Das Abknicken und/oder Kurvenförmige Verformen der Rückstromklappen oder Serrations oder Turbulatoren kann mittels Wärmeformen mit und ohne Formen durch z.B. Biegen erfolgen. Insbesondere können diese mehrfache Verformungen in 2D- und 3D-Kontur -Verformung erfahren.

Eine Herstellung mittels 3D-Druck ist ebenfalls möglich.

Auch können die Elemente aus verschiedenen Materialien, wie Faser verstärkte Kunststoffmaterialien (FVK), Metallen oder anderen Kunststoffen bestehen (insbesondere mit hoher UV- und Witterungsbeständigkeit von mindestens 5 Jahren, bevorzugt mind. 10 Jahren, ganz besonders mind. 20 Jahren)

Verwendung: für Flügel, Propeller, Rotorblätter, Turbinen, Gehäuse und andere Gegenstände mit Fluidströmungen

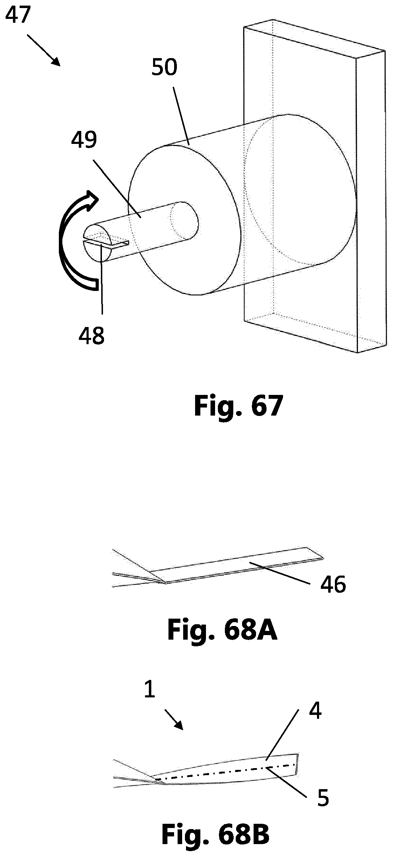

Fig. 67 zeigt ein Umformwerkzeug 47 zur Herstellung eines Verwirbelungselements 1.

Das Umformwerkzeug 47 ist als mit einer Rotationsachse 49 eines Rotationsmagneten 50 verbundene Aufnahme 48 ausgebildet. Die Aufnahme ist zum Einführen eines zu verdrehenden Blechs, insbesondere eines zur Ausbildung eines aerodynamisch aktiven Abschnitts 3 zugeschnitten Blechs bzw. Blechstreifens, ausgebildet.

Fig. 68A zeigt ein Blech 46 vor einer Umformung.

Es handelt sich um ein zur Ausbildung eines aerodynamisch aktiven Abschnitts 3 zugeschnitten Blech 46. Es kann sich beispielsweise um ein thermoplastisches Faserverbundblech oder ein metallisches Blech handeln.

Zur Herstellung eines Verwirbelungselements 1 aus dem Blech 46 wird dieses in die Aufnahme des Umformwerkzeugs 47 eingebracht. Anschließend wird das Blech umgeformt mittels des Rotationsmagneten 50 durch zumindest abschnittsweises Aufbringen einer Verdrehung des Blechs 46 um zumindest 10°, insbesondere bis zu 180°, mit seinem gesamten Querschnitt um eine gemeinsame Achse 5, was durch Drehen der Rotationsachse 49 des Rotationsmagneten 50 erreicht wird. Somit wird ein verdrehtes Leitblech 4 geschaffen.

Je nach Werkstoff, beispielsweise im Falle eines thermoplastischen Materials, kann das Blech 46 vor und/oder während des Verdrehens erwärmt werden.

Fig. 68B ein Verwirbelungselement 1 mit verdrehtem Leitblech 4.

Das Verwirbelungselement 1 ist in dieser Weise hergestellt und weist einen aerodynamisch aktiven Abschnitt mit einem Leitblech 4 mit einem Verdrehwinkel von beispielhaft 90° auf. Selbstverständlich sind auch andere Verdrehwinkel des Luftleitblechs 4 möglich, insbesondere bis zu 180°, wie beispielsweise gemäß Fig. 18 bis 20.

Selbstverständlich lassen sich in gleicher Weise mit mehreren parallelen Umformwerkzeugen 47 eine Mehrzahl von parallelen Leitblechen verdrehen, insbesondere sowohl in einer Anordnung mit gleichsinniger Drehrichtung, beispielsweise wie gemäß Figur 12, oder mit gegensinniger Drehrichtung, beispielsweise wie gemäß Figur 27, 28 oder 30. Ferner sind abschnittsweise unterschiedliche Anordnungen und Verdrehungen herstellbar, beispielweise wie gemäß Figur 29.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Weitere (nicht beanspruchte) Ausführungsformen:
Vorrichtung zur aerodynamischen Verbesserung eines Flügels/ Rotorblattes wobei dieser Flügel/ Rotorblatt 3D-Elemente aufweist, die zumindest teilweise verdreht ausgeführt sind und mindestens einen Verdrehwinkel von > 0 °, bevorzugt > 10 °, besonders bevorzugt > 30 ° aufweisen.

Vorrichtung zur aerodynamischen Verbesserung eines Flügels/ Rotorblattes wobei dieser Flügel/ Rotorblatt Elemente aufweist, die zumindest teilweise verdreht ausgeführt sind und mindestens einen Verdrehwinkel von > 10 °, bevorzugt bis zu 720 ° aufweist und dadurch eine starke Verkleinerung der Verwirbelungen des Endkantenwirbels erfolgt, was zumindest zur Lärmreduzierung von mind. > 3 dB(A), bevorzugt zur sehr deutlichen Lärm- und/oder Last-Reduzierung und/oder einer Ertragssteigerung beiträgt.

Bezugszeichenliste

| 1 | Verwirbelungselement |
|---|---|
| 2 | Befestigungsabschnitt |
| 3 | strömungsaktiver Abschnitt |
| 3A, 3B | strömungsaktive Abschnitte |
| 4 | Leitblech |
| 4A, 4B | Leitblech |
| 5 | Achse |
| 6 | Ausrichtungsabschnitt |
| 7 | erster Teil |
| 8 | zweiter Teil |
| 9 | Knick |
| 10 | aerodynamisches Profil |
| 11 | Profiloberfläche |
| 12 | Strömung |
| 13 | Profilendkante |
| 14 | Endkanten-Wirbel |

| 15 | Wirbel |
|----|--------|
| 16 | Wirbel |
| 17 | Rotorblatt |
| 18 | vordere Kante |
| 19 | vordere kurze Kante |
| 20 | hintere kurze Kante |
| 21 | lange Kante |
| 22 | lange Kante |
| 23 | Ausnehmung |
| 24 | Verstärkung |
| 25 | Schenkel |
| 26 | Stoßbereich |
| 27 | Umfangsgeschwindigkeitsvektor |
| 28 | gezackte Strukturen |
| 29 | Drehachse |
| 30 | Windkraftanlage |
| 31 | Rotor |
| 32 | Nabe |
| 33 | Rotorblatt |
| 34 | Gondel |
| 35 | Turm |
| 36 | Turbinengehäuse |
| 37 | Rastfortsatz |
| 38 | Rastausnehmung |
| 39 | Ausnehmung |
| 40 | Windkanal |
| 41 | Gebläse |
| 42 | Gleichrichter |
| 43 | Düse |
| 44 | Messvolumen |
| 45 | Lärmsensor |
| 46 | Blech |
| 47 | Umformwerkzeug |
| 48 | Aufnahme |
| 49 | Rotationsachse |
| 50 | Rotationsmagnet |

**Patentansprüche**

1. Verwirbelungselement (1) zur Verwirbelung einer Fluidströmung und zur Lärmreduktion und Ertragssteigerung für ein rotierendes aerodynamisches Profil (10), mit:

   einem Befestigungsabschnitt (2), der zur Befestigung an einer Profiloberfläche (11) des rotierenden aerodynamischen Profils (10) ausgebildet ist; und
   mehreren mit dem Befestigungsabschnitt (2) verbundenen strömungsaktiven Abschnitten (3, 3A, 3B), wobei die strömungsaktiven Abschnitte (3, 3A, 3B) im Bereich einer Profilendkante (13) der Profiloberfläche (11) anordenbar sind und jeweils ein Leitblech (4) aufweisen, wobei die Leitbleche (4) jeweils zumindest abschnittsweise mit ihrem gesamten Querschnitt um eine gemeinsame Achse (5) verdreht une
   benachbarte Leitbleche (4) jeweils abwechselnd in unterschiedliche Drehrichtungen helix- oder schraubenförmig verdreht ausgebildet sind, wobei die Leitbleche (4) jeweils um zumindest 10°, insbesondere zumindest eine achtel Umdrehung, bevorzugt um zumindest eine viertel Umdrehung, um die Achse (5) verdreht ausgebildet sind, und
   wobei die Leitbleche (4) dreiecksförmig, trapezförmig, teilkreisförmig, teilellipsenförmig und/oder vieleckförmig ausgebildet sind.

2. Verwirbelungselement (1) nach Anspruch 1, **dadurch gekennzeichnet, dass** die Leitbleche (4) Längen von 0,1-facher bis zu 20-facher Breite aufweisen.

3. Verwirbelungselement (1) nach einem der vorstehenden Ansprüche, **dadurch gekennzeichnet, dass** die Leitbleche (4) Breiten von 0,2 mm bis 300 mm und/oder Dicken in Bereichen von 0,2 mm bis 10 mm, vorzugsweise 0,25 mm bis 5 mm, aufweisen.

4. Verwirbelungselement (1) nach einem der vorstehenden Ansprüche, **dadurch gekennzeichnet, dass** die Leitbleche (4) jeweils zumindest abschnittsweise in sich selbst verdreht ausgebildet sind, so dass die Achse (5) in dem jeweiligen Leitblech (4) verläuft.

5. Verwirbelungselement (1) nach einem der vorstehenden Ansprüche, **dadurch gekennzeichnet, dass** die Leitbleche (4) jeweils zur schrägen Anströmung asymmetrisch, insbesondere in einer ebenen Projektion asymmetrisch, ausgebildet sind.

6. Verwirbelungselement (1) nach einem der vorstehenden Ansprüche, **dadurch gekennzeichnet, dass** zwischen dem Befestigungsabschnitt (2) und den strömungsaktiven Abschnitten (3, 3A, 3B) ein Ausrichtungsabschnitt (6) zur von dem Befestigungsabschnitt (2) unterschiedlichen Ausrichtung der Achsen (5) der strömungsaktiven Abschnitte (3, 3A, 3B) vorgesehen ist.

7. Verwirbelungselement (1) nach einem der vorstehenden Ansprüche, **dadurch gekennzeichnet, dass** der Befestigungsabschnitt (2) einteilig mit den strömungsaktiven Abschnitten (3, 3A, 3B) und/oder einem zwischen dem Befestigungsabschnitt (2) und den strömungsaktiven Abschnitten (3, 3A, 3B) vorgesehenen Ausrichtungsabschnitt (6), der zur von dem Befestigungsabschnitt (2) unterschiedlichen Ausrichtung der Achsen (5) der strömungsaktiven Abschnitte (3, 3A, 3B) vorgesehen ist, ausgebildet ist, insbesondere als einteiliges Blech oder einteiliger Streifen.

8. Verwirbelungselement (1) nach einem der vorstehenden Ansprüche 1 bis 6, **dadurch gekennzeichnet, dass** der Befestigungsabschnitt (2) und die strömungsaktiven Abschnitte (3, 3A, 3B) mit zwei unterschiedlichen Teilen (7, 8) ausgebildet sind, die miteinander, insbesondere formschlüssig, gekoppelt sind.

9. Verwirbelungselement (1) nach einem der vorstehenden Ansprüche 1 bis 5, **dadurch gekennzeichnet, dass** die strömungsaktiven Abschnitte (3, 3A, 3B), insbesondere in regelmäßigen Abständen, mit zumindest im Wesentlichen gleicher Ausrichtung ihrer Achsen (5) an dem Befestigungsabschnitt (2) angeordnet sind.

10. Verwirbelungselement (1) nach einem der vorstehenden Ansprüche, **dadurch gekennzeichnet, dass** die benachbarten Leitbleche (4) jeweils abwechselnd in unterschiedliche Drehrichtungen verdreht zur Erzeugung gegensinniger Wirbel (9A, 9B) ausgebildet sind.

11. Verwirbelungselement (1) nach einem der vorstehenden Ansprüche, **dadurch gekennzeichnet, dass** der Befestigungsabschnitt (2) zwei V-förmige zueinander stehende Schenkel (25) aufweist und dass die Leitbleche (4) jeweils zwei gerade kurze Kanten (19, 20), wobei die vordere kurze Kante (19) breiter ist als die hintere kurze Kante (20), und zwei gerade oder kurvenförmige lange Kanten (21, 22) aufweisen, wobei im Bereich eines die beiden Schenkel (25) verbindenden Stoßbereichs (26) die Leitbleche (4) mit ihren breiteren kurzen Kanten (19) mit dem Befestigungsabschnitt (2) verbunden sind.

12. Verfahren zur Herstellung eines Verwirbelungselements (1) nach einem der vorstehenden Ansprüche 1 bis 11, mit den Schritten:

Bereitstellen eines Blechs (46), insbesondere eines thermoplastischen Faserverbundblechs oder eines metallischen Blechs, welches zur Ausbildung von strömungsaktiven Abschnitten (3, 3A, 3B) zugeschnitten ist;
Einbringen des Blechs (46) in ein Umformwerkzeug (47), wobei das Umformwerkzeug (47) als Umformpresswerkzeug, insbesondere Heißumformpresswerkzeug ausgebildet ist; und
Umformen des Blechs (46) mittels des Umformpresswerkzeugs durch zumindest abschnittsweises Aufbringen einer Verdrehung des Blechs um zumindest 10°,
insbesondere bis zu 90°, mit seinem gesamten Querschnitt um eine gemeinsame Achse (5) durch eine entsprechende Form des Umformpresswerkzeugs.

**Claims**

1. A swirling element (1) for swirling a fluid flow and for reducing noise and increasing yield for a rotating aerodynamic profile (10), comprising:

an attachment portion (2) adapted to be attached to a profile surface (11) of the rotating aerodynamic profile (10); and
a plurality of flow-active portion (3, 3A, 3B) connected to the attachment portion (2), wherein the flow-active portions (3, 3A, 3B) can be arranged in the region of a profile end edge (13) of the profile surface (11) and each have a guide plate (4), wherein the guide plates (4) are each twisted at least in sections with their entire cross-section about a common axis (5) and adjacent guide plates (4) are each alternately twisted helically or screw-like in different directions of rotation,
wherein the guide plates (4) are each twisted by at least 10°, in particular by at least an eighth of a turn, preferably by at least a quarter of a turn, about the axis (5), and
wherein the guide plates (4) are triangular, trapezoidal, part-circular, part-elliptical and/or polygonal in shape.

2. Swirling element (1) according to claim 1, **characterized in that** the guide plates (4) have lengths of 0.1 times to 20 times the width.

3. Swirling element (1) according to one of the preceding claims, **characterized in that** the guide plates (4) have widths of 0.2 mm to 300 mm and/or thicknesses in ranges of 0.2 mm to 10 mm, preferably 0.25 mm to 5 mm.

4. Swirling element (1) according to one of the preceding claims, **characterized in that** the guide plates (4) are each designed to be twisted in themselves at least in sections, so that the axis (5) runs in the respective guide plate (4).

5. Swirling element (1) according to one of the preceding claims, **characterized in that** the guide plates (4) are each designed asymmetrically, in particular asymmetrically in a planar projection, with respect to the oblique incident flow.

6. Swirling element (1) according to one of the preceding claims, **characterized in that** an alignment portion (6) is provided between the attachment portion (2) and the flow-active portions (3, 3A, 3B) for aligning the axes (5) of the flow-active portions (3, 3A, 3B) differently from the attachment portion (2).

7. Swirling element (1) according to one of the preceding claims, **characterized in that** the attachment portion (2) is integrally formed with the flow-active portions (3, 3A, 3B) and/or an alignment portion (6) provided between the attachment portion (2) and the flow-active portions (3, 3A, 3B) for aligning the axes (5) of the flow-active portions (3, 3A, 3B) differently from the attachment portion (2), in particular as a one-piece sheet or one-piece strip.

8. Swirling element (1) according to one of the preceding claims 1 to 6, **characterized in that** the attachment portion (2) and the flow-active portions (3, 3A, 3B) are formed with two different parts (7, 8) which are coupled to one another, in particular in a form-fitting manner.

9. Swirling element (1) according to one of the preceding claims 1 to 5, **characterized in that** the flow-active portions (3, 3A, 3B) are arranged, in particular at regular intervals, with at least substantially the same orientation of their axes (5) on the attachment portion (2).

10. Swirling element (1) according to one of the preceding claims, **characterized in that** the adjacent guide plates (4) are each designed to be twisted alternately in different directions of rotation in order to generate opposing vortices (9A, 9B).

11. Swirling element (1) according to one of the preceding claims, **characterized in that** the attachment portion (2) has two V-shaped limbs (25) which are positioned in relation to one another, and **in that** the guide plates (4) each have two straight short edges (19, 20), the front short edge (19) being wider than the rear short edge (20), and two straight or curved long edges (21, 22), the guide plates (4) being connected to the attachment portion (2) by their wider short edges (19) in the region of a joint region (26) connecting the two limbs (25).

12. Method for manufacturing a swirling element (1) according to one of the preceding claims 1 to 11, comprising the steps of:

providing a sheet (46), in particular a thermoplastic fiber composite sheet or a metallic sheet, which is cut to form flow-active portions (3, 3A, 3B);
introducing the sheet (46) into a forming tool (47), the forming tool (47) being designed as a forming press tool, in particular a hot forming press tool; and

forming the sheet metal (46) by means of the forming press tool by applying, at least in sections, a rotation of the sheet by at least 10°, in particular up to 90°, with its entire cross-section about a common axis (5) by means of a corresponding shape of the forming press tool.

**Revendications**

1.  Elément de tourbillonnement (1) pour faire tourbillonner un écoulement de fluide et pour réduire le bruit et augmenter le rendement pour un profil aérodynamique rotatif (10), comprenant :

    une section de fixation (2) adaptée pour être fixée à une surface de profil (11) du profil aérodynamique rotatif (10) ; et
    une pluralité de sections actives sur le plan de l'écoulement (3, 3A, 3B) reliées à la section de fixation (2), les sections actives sur le plan de l'écoulement (3, 3A, 3B) pouvant être disposées dans la zone d'un bord d'extrémité de profil (13) de la surface de profil (11) et présentant chacune une tôle de guidage (4), les tôles de guidage (4) étant respectivement tournées au moins par sections avec l'ensemble de leur section transversale autour d'un axe commun (5) et des tôles de guidage (4) étant respectivement tournées en hélice ou en spirale en alternance dans des sens de rotation différents,
    les tôles de guidage (4) étant réalisées chacune avec une rotation d'au moins 10°, en particulier d'au moins un huitième de tour, de préférence d'au moins un quart de tour, autour de l'axe (5), et
    les tôles de guidage (4) étant réalisées en forme de triangle, de trapèze, de cercle partiel, d'ellipse partielle et/ou de polygone.

2.  Elément de tourbillonnement (1) selon la revendication 1, **caractérisé en ce que** les tôles de guidage (4) présentent des longueurs de 0,1 fois à 20 fois la largeur.

3.  Elément de tourbillonnement (1) selon l'une des revendications précédentes, **caractérisé en ce que** les tôles de guidage (4) présentent des largeurs de 0,2 mm à 300 mm et/ou des épaisseurs dans des plages de 0,2 mm à 10 mm, de préférence de 0,25 mm à 5 mm.

4.  Elément de tourbillonnement (1) selon l'une des revendications précédentes, **caractérisé en ce que** les tôles de guidage (4) sont réalisées chacune au moins par sections en étant tournées sur elles-mêmes, de sorte que l'axe (5) s'étend dans la tôle de guidage (4) respective.

5.  Elément de tourbillonnement (1) selon l'une des revendications précédentes, **caractérisé en ce que** les tôles de guidage (4) sont respectivement asymétriques par rapport à l'écoulement oblique, en particulier asymétriques dans une projection plane.

6.  Elément de tourbillonnement (1) selon l'une quelconque des revendications précédentes, **caractérisé en ce qu'**une section d'orientation (6) est prévue entre la section de fixation (2) et les sections actives d'écoulement (3, 3A, 3B) pour orienter les axes (5) des sections actives d'écoulement (3, 3A, 3B) différemment de la section de fixation (2).

7.  Elément de tourbillonnement (1) selon l'une quelconque des revendications précédentes, **caractérisé en ce que** la section de fixation (2) est solidaire des sections actives d'écoulement (3, 3A, 3B) et/ou d'une section d'orientation (6) située entre la section de fixation (2) et les sections actives d'écoulement (3, 3A, 3B), qui est prévue pour l'orientation différente de la section de fixation (2) des axes (5) des sections actives en termes d'écoulement (3, 3A, 3B), est réalisée, en particulier sous la forme d'une tôle ou d'une bande d'une seule pièce.

8.  Elément de tourbillonnement (1) selon l'une quelconque des revendications 1 à 6 précédentes, **caractérisé en ce que** la section de fixation (2) et les parties actives sur le plan de l'écoulement (3, 3A, 3B) sont formées avec deux parties différentes (7, 8) qui sont couplées l'une à l'autre, notamment par complémentarité de forme.

9.  Elément de tourbillonnement (1) selon l'une quelconque des revendications 1 à 5 précédentes, **caractérisé en ce que** les sections actives d'écoulement (3, 3A, 3B) sont disposées, notamment à intervalles réguliers, avec une orientation au moins sensiblement identique de leurs axes (5) sur la section de fixation (2).

10. Elément de tourbillonnement (1) selon l'une des revendications précédentes, **caractérisé en ce que** les tôles de guidage (4) voisines sont respectivement tournées en alternance dans des sens de rotation différents pour produire des tourbillons (9A, 9B) de sens opposés.

11. Elément de tourbillonnement (1) selon l'une des revendications précédentes, **caractérisé en ce que** la section de fixation (2) présente deux branches (25) en forme de V l'une par rapport à l'autre et **en ce que** les tôles de guidage (4) présentent chacune deux bords courts rectilignes (19, 20), le bord court avant (19) étant plus large que le bord court arrière (20), et deux bords longs (21, 22) droits ou en forme de courbe, les tôles de guidage (4) étant reliées à la section de fixation (2) par leurs bords courts plus larges (19) dans la zone d'une zone de jonction (26) reliant les deux branches (25).

12. Procédé de fabrication d'un élément de tourbillonnement (1) selon l'une quelconque des revendications 1 à 11 précédentes, comprenant les étapes consistant à:

mise à disposition d'une tôle (46), en particulier d'une tôle composite thermoplastique à fibres ou d'une tôle métallique, qui est découpée pour former des sections actives d'écoulement (3, 3A, 3B) sur le plan de l'écoulement;
introduction de la tôle (46) dans un outil de formage (47), l'outil de formage (47) étant conçu comme un outil de compression de formage, en particulier un outil de compression de formage à chaud; et
formage de la tôle (46) au moyen de l'outil de presse de formage par application, au moins par sections, d'une torsion de la tôle d'au moins 10°, en particulier jusqu'à 90°, avec toute sa section transversale autour d'un axe commun (5), par une forme correspondante de l'outil de presse de formage.

**Fig. 1**

**Fig. 2**

**Fig. 3**

**Fig. 4**

**Fig.5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**Fig. 17**

**Fig. 18**

**Fig. 19**

**Fig. 20**

**Fig. 21**

**Fig. 22**

**Fig. 23**

**Fig. 24**

**Fig. 25**

**Fig. 26**

**Fig. 27**

**Fig. 28**

**Fig. 29**

**Fig. 30**

**Fig. 31**

10

1

3

2

23

28    13

4

**Fig. 32**

10

1

3    5    2    23

4

13

**Fig. 33**

**Fig. 34**

**Fig. 35**

4A

**Fig. 36**

4B

**Fig. 37**

**Fig. 38**

**Fig. 39**

**Fig. 40**

**Fig. 41**

**Fig. 42**

**Fig. 43**

Fig. 44

ERSATZBLATT (REGEL 26)

**Fig. 45**

**Fig. 46**

**Fig. 47**

**Fig. 48**

Fig. 49

Fig. 50

Fig. 51

Fig. 52

Fig. 53

Fig. 54

Fig. 55

Fig. 56

Fig. 57

Fig. 58

**Fig. 59:**

Fig. 60:

| | Momentenbeiwert NACA clean getript |
| --- | --- |
| | Momentenbeiwert Serration 20 % 90 Grad Cut Trapez |
| | Momentenbeiwert Serration 10 % 45 Grad gs  Trapez |

**Fig. 61:**

**Fig. 62**

**Fig. 63**

**Fig. 64**

**Fig. 65**

**Fig. 66**

47

50

49

48

**Fig. 67**

46

**Fig. 68A**

1

4

5

**Fig. 68B**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2824320 A1

- DE 102014213929 A1

**In der Beschreibung aufgeführte Nicht-Patentliteratur**

- **GYATT G W.** DEVELOPMENT AND TESTING OF VORTEX GENERATORS FOR SMALL HORIZONTAL AXIS WIND TURBINES. *Final Report DOE/NASA/0367-1,* 01. Juli 1986